# EUROPÄISCHE PATENTSCHRIFT

(11) **EP 3 853 960 B1**
(45) Veröffentlichungstag und Bekanntmachung des Hinweises auf die Patenterteilung: **23.04.2025**
(21) Anmeldenummer: 19812706.0
(22) Anmeldetag: 15.11.2019
(51) Int. Cl.: H02J 1/08, H02J 1/10, B63H 23/24

(54) **ENERGIEVERSORGUNGSSYSTEM FÜR EINE WASSERGEBUNDENE EINRICHTUNG**
POWER SUPPLY SYSTEM FOR A WATER-BOUND DEVICE
SYSTÈME DE DISTRIBUTION ÉLECTRIQUE POUR UNE INSTALLATION HYDRAULIQUE

(30) Priorität: 16.11.2018 DE 102018219711
(43) Veröffentlichungstag der Anmeldung: 28.07.2021
(73) Patentinhaber: Siemens Energy Global GmbH & Co. KG, 81739 München (DE)
(72) Erfinder: SCHULZ, Veiko, 21244 Buchholz I.D.N (DE); VOSS, Wolfgang, 91097 Oberreichenbach (DE); WYCISK, Michael, 24248 Mönkeberg (DE)
(86) Internationale Anmeldenummer: PCT/EP2019/081489
(87) Internationale Veröffentlichungsnummer: WO 2020/099636

(56) Entgegenhaltungen:
- US-A1- 2004 102 109
- US-A1- 2017 353 038
- US-A1- 2018 159 315

## Beschreibung

Die Erfindung betrifft ein Energieversorgungssystem für eine wassergebundene Einrichtung, insbesondere eine schwimmende Einrichtung. Schwimmende Einrichtungen sind beispielsweise Schiffe, U-Boote, Ölplattformen und/oder Gasplattformen. Beispiele für Schiffe sind Kreuzfahrtschiffe, Fregatten, Containerschiffe, Flugzeugträger, Eisbrecher etc. Schwimmende Einrichtungen sind wassergebundene Einrichtungen. Ölplattformen oder Gasplattformen, welche auf dem Meeresgrund stehen, sind Beispiele für wassergebundene Einrichtungen. Neben dem Energieversorgungssystem betrifft die Erfindung auch ein entsprechendes Verfahren zum Betrieb dieses Energieversorgungssystems.

Ein Energieversorgungssystem für eine wassergebundene Einrichtung bzw. eine schwimmende Einrichtung weist Energiequellen auf. Wird nachfolgend von einer schwimmenden Einrichtung gesprochen, so ist damit auch eine wassergebundene Einrichtung gemeint und umgekehrt. Beispiele für Energiequellen sind ein Dieselgenerator, eine Brennstoffzelle, eine Batterie/- Akkumulator, ein Schwungrad, etc. Der Diesel des Dieselgenerators ist beispielsweise mit Schwerölschiffsdiesel und/oder LNG betreibbar. Das Energieversorgungssystem ist beispielsweise dafür vorgesehen, einen Antrieb der schwimmenden Einrichtung mit elektrischer Energie zu versorgen oder auch Hilfsbetriebe bzw. weitere Verbraucher, wie Klimaanlage, Beleuchtung, Automatisierungssysteme, etc. Das Energieversorgungssystem ist insbesondere derart ausgestaltbar, dass auch bei Ausfall einer Energiequelle zumindest ein Notbetrieb für die schwimmende Einrichtung ermöglicht werden kann. Die Energieversorgung einer schwimmenden Einrichtung weist insbesondere ein Bordnetz auf. Das Bordnetz (das elektrische Bordnetz) dient der elektrischen Energieversorgung der schwimmenden Einrichtung.

Ist eine schwimmende Einrichtung beispielsweise dazu befähigt, ihre Position zu halten, so weist diese eine Vielzahl von Antrieben auf. Diese Antriebe weisen insbesondere einen Propeller oder einen Wasserstrahler (Borderjet) auf. Diese Antriebe zum Halten der Position des Schiffes im Wasser sind insbesondere unabhängig voneinander betriebsbereit zu halten. Weist diese schwimmende Einrichtung beispielsweise zwei oder mehr Antriebssysteme im Heckbereich auf, wie z.B. zwei POD-Antriebe oder zwei Propeller aus dem Schiffsrumpf ragenden Wellen, welche von einem elektrischen Motor und/oder von einem Dieselmotor mit einem Wellengenerator angetrieben sind, so ist es vorteilhaft, wenn diese im Falle eines Fehlers bei einem Antrieb unabhängig voneinander mit elektrischer Energie versorgt werden können.

Aus der EP 3 046 206 A1 ist eine Energieverteilung auf einem Schiff bekannt. Diese weist einen ersten Mittelspannungsbus und einen zweiten Mittelspannungsbus auf. Der zweite Mittelspannungsbus weist keine direkte Verbindung mit dem ersten Mittelspannungsbus auf. Weiterhin weist die Energieverteilung einen ersten AC-Bus mit niedriger Spannung, einen ersten Stromrichter zwischen dem ersten Mittelspannungsbus und dem ersten AC-Bus auf, um einen Leistungsflusses vom ersten Mittelspannungsbus zum ersten AC-Bus zu ermöglichen. Weiterhin weist die Energieverteilung auch einen zweiten AC-Bus und einen zweiten Stromrichter zwischen dem zweiten Mittelspannungsbus und dem zweiten AC-Bus auf, um einen Leistungsflusses vom zweiten Mittelspannungsbus zum zweiten AC-Bus zu ermöglichen.

Aus der WO 2016/116595 A1 ist eine Einrichtung zur Verteilung gespeicherter elektrischer Energie auf einem Schiff bekannt, welche auch einen oder mehrere Wechselstromverbraucher umfasst. Im Falle eines Ausfalls einer primären elektrischen Energieversorgung ist ein DC-Netz mit einer Vielzahl von elektrischen Energiespeicherelementen vorgesehen, um die Versorgung eines oder mehrerer AC-Verbraucher mit gespeicherter elektrischer Energie zu ermöglichen. Im Gleichstromkreis sind mehrere Unterbrechersysteme zum Abschalten einer oder mehrerer elektrischer Hilfsenergie vorgesehen.

Aus der DE 10 2009 043 530 A1 ist ein Energieversorgungssystem mit einer elektrischen Antriebswelle (elektrischen Welle) bekannt. Die elektrische Antriebswelle weist zumindest einen drehzahlveränderbaren Generator zur Erzeugung einer Spannung mit variabler Amplitude und variabler Frequenz auf und zumindest einem mit dieser Spannung versorgten drehzahl-veränderbaren Antriebsmotor. Der Generator weist beispielsweise eine Supraleiter-Wicklung, insbesondere eine Hoch-Temperatur-Supraleiter (HTS)- Wicklung, auf.

Aus der WO 2011/092330 A2 ist ein Schiffsantriebssystem mit zumindest einer ersten und einer zweiten elektrischen Antriebswelle (elektrische Welle) zum Antrieb jeweils einer Vortriebseinheit, insbesondere eines Waterjets oder z.B. eines Propellers bekannt, wobei jede der elektrischen Antriebswellen zumindest einen von einer Verbrennungskraftmaschine angetriebenen drehzahlveränderbaren Generator zur Erzeugung einer Motorspannung mit variabler Amplitude und variabler Frequenz und zumindest einen mit dieser Motorspannung versorgten und mit einer Vortriebseinheit gekoppelten drehzahlveränderbaren Antriebsmotor aufweist, wobei die erste und die zweite Antriebswelle von einem ersten Betriebszustand, in dem sie elektrisch voneinander getrennt sind, in einen zweiten Betriebszustand schaltbar sind, in dem sie elektrisch derart miteinander gekoppelt sind, dass eine Energieübergabe von dem zumindest einen Generator der einen Antriebswelle zu dem zumindest einen Antriebsmotor der anderen Antriebswelle erfolgen kann.

Aus der EP 2 949 571 A1 ist ein Antriebssystem für ein Schiff bekannt, wobei das Schiff ein elektrisches Bordnetz mit einer festen Bordnetzfrequenz aufweist, wobei das Antriebssystem einen Antriebselektromotor zum Antrieb des Schiffes, einen Frequenzumrichter, über den dem Antriebselektromotor elektrische Energie aus dem Bordnetz zuführbar ist, eine Antriebsmaschine, einen von der Antriebsmaschine antreibbaren Antriebsgenerator, und eine elektrische Welle zur Verbindung des Antriebselektromotors mit dem Antriebsgenerator aufweist, wobei der Antriebselektromotor wahlweise von dem Frequenzumrichter oder von dem Antriebsgenerator antreibbar ist.

Weitere elektrische Bordnetze für elektrisch angetriebene Wasserfahrzeuge sind z.B. in den Druckschriften US 2017/353038 A1, US 2004/102109 A1 und US 2018/159315 A1 offenbart.

In elektrischen Bordnetzen wird die elektrische Energie oft in verschiedenen Spannungsebenen und/oder in verschiedenen Spannungsformen (AC bzw. DC) benötigt. Dazu wird beispielsweise Primärenergie aus einer oder mehreren Verbrennungskraftmaschinen zur Verfügung gestellt und mittels eines oder mehrere Drehstromgeneratoren (Asynchrongenerator bzw. Synchrongenerator) in elektrische Energie umgewandelt. Diese elektrische Energie wird insbesondere auf der höchsten im Bordnetz zur Verfügung stehenden Spannungsebenen (Versorgungsnetz obere Spannungsebene) erzeugt. Um weitere Spannungsebenen zu erzeugen werden zum Beispiel Transformatoren und/oder DC/DC-Wandler eingesetzt. Die Transformatoren haben in der Regel ein hohes Gewicht und Bauvolumen, Verluste in Höhe von ca. 1% und die Eingangs- und Ausgangs-Frequenz sind immer identisch. Beispielsweise wird die gesamte erzeugte Generatorleistung über die obere Spannungsebene eingespeist und auf einen Hautenergiebus verteilt. Der Hauptenergiebus ist in vielen Anlagen bzw. Bordnetzen ein 3 Phasen Wechselstrom Bus (Wechselstrom=AC), wodurch ein AC Netz aufgespannt ist. Die Verteilung der elektrischen Energie erfolgt dabei insbesondere über eine oder mehrere Schalttafeln. In AC Netzen ist die Frequenz eines unteren Netzes gleich der Frequenz des oberen Netzes. Dabei unterscheidet sich das untere Netz vom oberen Netz durch die Spannung, wobei das obere Netz eine höhere Spannung hat als das untere Netz. Die Verwendung eines AC Netzes mit einem AC Energiebus zur Verteilung der elektrischen Energie kann nachteilig sein, wenn in der oberen Spannungsebene die Frequenz variabel ist. Variable Frequenzen sind besondere die Folge von drehzahlvariablen Verbrennungsmaschinen. Um aus einem oberen AC Energiebus eine untere Spannungsebene zu versorgen werden in der Regel mehrere Transformatoren benötigt. Die Energie wird über den oberen AC Hauptenergiebus also über die obere Spannungsebene übertragen. Innerhalb einer Spannungsebene kann die Energie über eine Schaltanlage verteilt werden. Zur Verteilung von AC wird eine AC Schaltanlage verwendet. Die Spannungshöhe des Energiebusses bzw. der Spannungsebene hängen maßgeblich von der installierten Leistung ab. Die verschiedenen Verbraucher werden gespeist und die darunter liegenden Spannungsebenen mit Energie versorgt. Zur Verbindung der unterschiedlichen Spannungsebenen sind in AC Netzen Transformatoren notwendig, wodurch die Spannungsebenen die gleiche Frequenz haben. Das Übersetzungsverhältnis des verwendeten Transformators legt das Verhältnis der Spannungen fest.

Bei einigen Schiffen ist es schwierig als Verbrennungskraftmaschinen Diesel einzusetzen, durch welche ein Generator zur Erzeugung elektrischer Energie antreibbar ist, da Diesel schwer sind. Auch sind Diesel Raum fordern. Auch können sich Herausforderungen dadurch ergeben, dass es Beschränkungen bezüglich der installierten Leistung gibt und/oder Spannung bzw. Frequenz der erzeugten elektrischen Energie innerhalb eines bestimmten Bandes innerhalb des Betriebes zu halten sind. Durch eine elektrische Welle können diesbezüglich einige Vorteile erzielt werden. Bei der elektrischen Welle ergibt sich eine direkte Kopplung zwischen Generator und Antriebsmotor. Der Antriebsmotor dabei derart direkt mit dem Generator gekoppelt, dass sich eine Proportionalität zwischen der Frequenz des Generators und des Antriebsmotors (Motors) ergibt. Proportionalität hängt von der Polpaarzahl des Generators bzw. des Rotors ab.

Da auf der schwimmenden Einrichtung die Verbraucher unterschiedliche Anforderungen an das Energieversorgungssystem stellen und auch abhängig vom Betriebszustand der schwimmenden Einrichtung unterschiedliche Verbraucher Energie vom Energieversorgungssystem beziehen, ist dieses möglichst flexibel auszulegen. Eine Aufgabe der vorliegenden Erfindung ist es demnach, ein flexibles Energieversorgungssystem bzw. ein flexibles Verfahren zum Betrieb eines solchen Energieversorgungssystems bereit zu stellen. Eine weitere Aufgabe der vorliegenden Erfindung ist es ein Energieversorgungssystem anzugeben, welches bezüglich des Gewichtes der für das Energieversorgungssystems nötigen Einrichtungen verbessert ist.

Eine Lösung der Aufgabe gelingt nach Anspruch 1 bzw. 11. Weitere Ausgestaltungen der Erfindung ergeben sich nach den Ansprüchen 2 bis 10 bzw. 12 bis 13.

Ein Energieversorgungssystem für eine wassergebundene Einrichtung weist eine elektrische Welle auf, wobei die elektrische Welle mit einem mit einem ersten Gleichspannungsbus für eine erste Gleichspannung und mit einem zweiten Gleichspannungsbus für eine zweite Gleichspannung verbindbar ist, wobei die elektrische Welle zumindest einen von einer Verbrennungskraftmaschine angetriebenen drehzahlveränderbaren Generator zur Erzeugung einer Motorspannung mit variabler Amplitude und variabler Frequenz und zumindest einen mit dieser Motorspannung versorgten und mit einer Vortriebseinheit gekoppelten drehzahlveränderbaren Antriebsmotor aufweist.

In einer Ausgestaltung des Energieversorgungssystem kann folgendes erreicht bzw. ausgeführt sein. Anstelle eines AC-Busses mit fester Frequenz kann ein Energieversorgungssystem verwendet werden, welches auf DC Bussystemen basiert, wobei eine elektrische Welle für den Antrieb vorgesehen ist; als Kopplung zwischen einem Niederspannungs- Gleichspannungsbus (LV-DC) und einem Mittelspannungs-Gleichspannungsbus (MV-DC) ist beispielsweise ein bidirektionaler DC/DC-Steller vorgesehen. Die wassergebundene Einrichtung, welche insbesondere einen hohen Leistungsbedarf von größer 5 MW aufweist, weiß beispielsweise einen oder zwei Propeller bzw. einen oder zwei Wasserjets auf. Zur Erzeugung elektrischer Energie mittels Generatoren, können z.B. ein bis vier Gasturbinen vorgesehen sein. Mittels der Energie aus den Gasturbinen können so Propeller oder Wasserjets betrieben werden. Die Gasturbinen sind also insbesondere ein Teil einer elektrischen Welle bzw. einer elektrischen Welle zugeordnet. In einer Ausgestaltung weist ein Schiff zwei bis vier Propeller auf. Ein Propeller hat dabei insbesondere eine Leistung zwischen 4 MW und 12 MW, insbesondere zumindest 5 MW. Eine Hotellast, insbesondere bei einem Kreuzfahrtschiff, bzw. die übrige elektrische Leistung der wassergebundenen Einrichtung ist dabei wesentlich geringer als die Antriebsleistung. Dabei kann es sich beispielsweise um ein Verhältnis von eins zu zehn handeln bzw. eine erforderliche Leistung von kleiner 10 MW erforderlich sein.

Eine typische Geschwindigkeit eines Turbogenerators sind 3000 Umdrehungen pro Minute oder höher. Eine Propellergeschwindigkeit liegt beispielsweise zwischen 100 und 300 Umdrehungen pro Minute.

In einer Ausgestaltung des Energieversorgungssystems kann dieses in mehreren möglichen Modi betrieben werden. Die Antriebsleistung kann beispielsweise von einem Gleichspannungsbus kommen. Weiterhin kann die Antriebsleistung von einem Turbogenerator kommen. Weiterhin kann die Antriebsleistung von einem Turbogenerator und von einem Gleichspannung kommen. Weiterhin kann die Antriebsleistung von einem Turbogenerator kommen, wobei eine daraus erzeugte elektrische Energie in einen Gleichspannungsbus gespeist wird. In dem Energieversorgungssystem können für Motoren und/oder Generatoren supraleitende Werkstoffe eingesetzt werden. Dies sind besondere Hochtemperatur Supraleiter (HTS). Die Hochtemperatursupraleitung betrifft insbesondere zumindest eine Komponente wie den Motor oder den Generator der elektrischen Welle.

Es können für die elektrische Welle (im Englischen auch als eShaft bezeichnet verschiedene Modi realisiert werden. Hierzu Beispiele in einer tabellarischen Form für verschiedene Modi:
- Modus 1: rein elektrischer Modus
- Modus 2: mit elektrischer Welle
- Modus 3: mit elektrischer Welle
- Modus 4: mit elektrischer Welle
- Modus 5: mit elektrischer Welle

| Modus | Turbogenerator ist aktiv und liefert Energie | Antriebsmotor der Elektrischen Welle wird gespeist (von dem Turbogenerator) | Zumindest ein DC-Bus liefert Energie für den Antriebsmotor der elektrischen Welle | Zumindest ein DC-Bus wird mit elektrischer Energie versorgt (zumindest teilweise von dem Turbogenerator) |
|---|---|---|---|---|
| 1 | | | X | |
| 2 | X | X | | |
| 3 | X | X | X | |
| 4 | X | X | | X |
| 5 | X | X | X | X |

Durch die Verwendung von DC/DC Stellern, welche insbesondere bidirektional ausgeführt sind, lässt sich ein Niederspannungs-DC-System (LV-DC) mit einer elektrischen Welle verbinden wobei kein konventioneller Transformator notwendig ist. Vorteilhaft können Mittenfrequenz (MF) oder Hochfrequenz (HF) Transformatoren eingesetzt werden um Gewicht und/oder Platz zu sparen. Im Vergleich zu einem 50/60 Hz Transformator kann mit einem 1000 Hz Transformator ungefähr 90% des Gewichtes eingespart werden. Höhere Schaltfrequenzen und ein verbessertes Transformatormaterial bieten das Potenzial einer weiteren Reduzierung von Gewicht und Platz bzw. das Potenzial einer Erhöhung der Effizienz.

Ist beispielsweise nur eine Energiequelle für die elektrische Welle vorgesehen ist der Einsatz von Batterien, Brennstoffzellen, Schwungrädern, etc. vorteilhaft, wobei dies sowohl die LV DC Seite betrifft, wie auf die MV DC Seite.

Durch den Einsatz der elektrischen Welle in Verbindung mit DC Bussen können Transformationsschritte (Einsatz von Transformatoren) reduziert werden wie auch ein verbesserter Energiefluss erzielt werden. Die Anbindung der elektrischen Welle an einen MVDC Bus und einem weiteren DC/DC Steller ermöglicht eine galvanische Trennung der elektrischen Welle von Energiespeichersystemen (ESS) wie einer Batterie bzw. von einem LV DC Bus. Die Verwendung einer Gasturbine als Energiequelle der elektrischen Welle führt zu einer Reduzierung von Gewicht im Vergleich zu einem diese. Damit kann die metazentrische Höhe verbessert werden.

Das Energieversorgungssystem kann auch einen Antriebsmotor mit einer Niederspannungswicklung (LV) und einer Mittelspannung (MV) aufweisen. Die Mittelspannungswicklung kann über einen Wechselrichter aus dem LVDC Bus versorgt werden.

In einer Ausgestaltung des Energieversorgungssystems mit Antriebsleistungen von größer 5,5 MW pro Antriebsstrang, können beispielsweise auch Diesel eingesetzt werden. Die Verteilung elektrischer Energie erfolgt insbesondere über eine Mittelspannungsschalttafel. Die Antriebsmotoren werden durch Stromrichter gespeist.

In einer Ausgestaltung weist das Energieversorgungssystem für eine wassergebundene Einrichtung, sowie insbesondere für eine schwimmende Einrichtung, also einen ersten Gleichspannungsbus für eine erste Gleichspannung und einen zweiten Gleichspannungsbus für eine zweite Gleichspannung auf. Dies bedeutet, dass der erste Gleichspannung für eine erste Gleichspannungsebene geeignet bzw. vorgesehen ist und der zweite Gleichspannungsbus für eine zweite Gleichspannungsebenen geeignet bzw. vorgesehen ist. Die erste Gleichspannungsebene ist insbesondere höher als die zweite Gleichspannungsebene. Die erste Gleichspannungsebene entspricht also dem ersten Gleichspannungsbus und die zweite Gleichspannungsebene entspricht dem zweiten Gleichspannungsbus. Beispielsweise unterscheiden sich die Gleichspannungsebenen um einen Faktor zwischen 5 und 50. Entsprechendes ergibt sich bei einer wassergebundenen bzw. schwimmenden Einrichtung, insbesondere ein Schiff, welche ein Energieversorgungssystem in einer der beschriebenen Ausgestaltungen aufweist.

Die schwimmende bzw. wassergebundene Einrichtung und/oder das Energieversorgungssystem weist in einer Ausgestaltung eine erste Zone und eine zweite Zone auf. Auch hier soll, wie bereits obig angemerkt, im weiteren Fortgang unter einer schwimmenden Einrichtung auch eine wassergebundene Einrichtung verstanden werden. Die schwimmende Einrichtung kann auch mehr als zwei Zonen aufweisen. Die Art der Zonen kann unterschiedlich sein. So kann es sich bei einer Zone beispielsweise um eine Feuerzone handeln. Zonen können voneinander durch eine oder mehrere Schotten getrennt sein. Der Art bilden sich Kammern aus, welche beispielsweise dem Schutz vor Feuer und oder dem Schutz vor einem Untergang der schwimmenden bzw. wassergebundenen Einrichtung dienen können. Ein Schott bzw. Schotten kann luftdicht und/oder flüssigkeitsdicht und/oder brandhemmend ausgelegt bzw. ausgeführt sein. In einer schwimmenden Einrichtung wie beispielsweise einem Schiff kann es zum Beispiel zumindest ein Querschott und/oder ein Längsschott und/oder ein wasserdichtes Deck geben. Jedoch bilden sich Zonen bzw. Kammern. Eine Kammer kann eine Zone darstellen wie auch eine Zone eine Kammer darstellen kann. Das Energieversorgungssystem für die schwimmende bzw. wassergebundene Einrichtung weist eine erste Energiequelle und eine zweite Energiequelle auf, wobei die erste Energiequelle in der ersten Zone zur Speisung zumindest eines Gleichspannungsbusses der zumindest zwei Gleichspannungsbusse vorgesehen ist und wobei die zweite Energiequelle in der zweiten Zone zur Speisung zumindest eines Gleichspannungsbusses der zumindest zwei Gleichspannungsbusse vorgesehen ist. Die erste Energiequelle kann also beispielsweise zur Speisung nur des ersten Gleichspannungsbusses vorgesehen sein oder zur Speisung des ersten Gleichspannungsbusses und des zweiten Gleichspannungsbusses vorgesehen sein. Ebenso verhält es sich mit der zweiten Energiequelle welchen beispielsweise zur Speisung nur des ersten Gleichspannungsbusses vorgesehen sein oder zur Speisung des ersten Gleichspannungsbusses und des zweiten Gleichspannungsbusses vorgesehen sein kann. Die Speisung des jeweiligen Gleichspannungsbusses betrifft dabei insbesondere eine direkte Verbindung zu dem Gleichspannungsbus. Unter einer direkten Verbindung ist eine elektrische Verbindung zu verstehen, bei welcher kein weiterer DC-Bus zur Energieverteilung zwischengeschaltet ist. Eine direkte Verbindung kann jedoch beispielsweise einen Stromrichter, einen Transformator, einen Schalter, einen DC/DC Steller aufweisen. Energiequellen des Energieversorgungssystems können beispielsweise folgenden Typs sein: ein Dieselgenerator, ein Gasturbinengenerator, eine Batterie, ein Kondensator, SUPER-Caps, ein Schwungradspeicher, Brennstoffzellen sein.

In einer Ausgestaltung des Energieversorgungssystems ist dieses zumindest teilweise zonenabhängig gegliedert. Insbesondere entspricht die Gliederung örtlich der Zonenaufteilung für zumindest zwei Zonen. Zonen der wassergebundenen Einrichtung ergeben sich insbesondere durch eine bauliche Einrichtung wie ein Schott. Eine Gliederung des Energieversorgungssystems ergibt sich insbesondere durch Schalteinrichtungen, welche eine elektrische Verbindung trennen oder herstellen können. Durch derartige Schalteinrichtungen können Abschnitte im Energieversorgungssystem ausgebildet sein.

In einer Ausgestaltung des Energieversorgungssystems wird zwischen primären Energiequellen und sekundären Energiequellen unterschieden. Primäre Energiequellen sind dem ersten Gleichspannungsbus (DC-Bus) zugeordnet, wobei eine primäre Energiequelle insbesondere der Gewinnung elektrischer Energie für den Hauptantrieb der schwimmenden bzw. wassergebundenen Einrichtung dient. Diese Zuordnung bedeutet, dass zwischen dieser primären Energiequelle und dem ersten Gleichspannungsbus kein weiterer Gleichspannungsbus zwischengeschaltet ist. Sekundäre Energiequellen sind dem zweiten Gleichspannungsbus (DC-Bus) zugeordnet, wobei eine sekundäre Energiequelle insbesondere der Gewinnung elektrischer Energie für Betriebssysteme der schwimmenden bzw. wassergebundenen Einrichtung dient, welche nicht dem Hauptantrieb der schwimmenden Einrichtung dienen. Auch diese Zuordnung bedeutet, dass zwischen dieser sekundären Energiequelle und dem zweiten Gleichspannungsbus kein weiterer Gleichspannungsbus zwischengeschaltet ist. Betriebssysteme der schwimmenden Einrichtung sind beispielsweise (Bordversorgung, Hotelbetrieb, Waffensysteme, etc.). In einer Ausgestaltung des Energieversorgungssystems sind sekundäre Energiequellen derart gewählt, dass diese ggf. schneller auf Lastschwankungen reagieren können. In die Last ist beispielsweise zumindest ein Antriebsmotor zum Antrieb der schwimmenden Einrichtung und oder weitere elektrische Verbraucher der schwimmenden Einrichtung für beispielsweise Pumpen, Kompressoren, Klimaanlagen, Seilwinden, Bordelektronik, etc. Bei einem Kreuzfahrtschiff werden elektrische Verbraucher für beispielsweise die Klimaanlage, die Wäscherei, die Beleuchtung, etc. auch als Hotellast bezeichnet.

Das Energieversorgungsystem kann mehrere Energiequellen gleichen Typs aufweisen. In einer Ausgestaltung des Energieversorgungssystems können Energiequellen unterschiedlichen Typs in unterschiedlichen Zonen sein. Dadurch kann die Versorgungssicherheit innerhalb der schwimmenden Einrichtung beispielsweise in Notfällen und/oder in einem Fehlerfall erhöht werden.

Durch die Verwendung eines ersten Gleichspannungsbusses und eines zweiten Gleichspannungsbusses in der schwimmenden Einrichtung kann elektrische Energie in einfacher Weise ohne unnötige Verluste von einem Bus in den anderen Bus übertragen werden. Dies ist insbesondere in einem Fehlerfall vorteilhaft bei dem eine oder mehrere Energiequellen für den ersten Bus ausfallen. Erfolgt eine Verknüpfung von Energieebenen über eine AC Verbindung so kann dies insbesondere in einem Fehlerfall zu höheren Verlusten führen. In DC Netzen wird die Energie erst gleichgerichtet, um auf der oberen DC Spannung verteilt zu werden (Umwandlung 1). Anschließend muss aus der DC Spannung mittels eines Wechselrichters eine AC Spannung erzeugt werden (Umwandlung 2). Der Wechselrichter muss die gleichen Funktionen wie ein Generator erfüllen (Selektivität und Frequenzführung in der unteren Spannungsebene) Zur Anpassung der Spannung ist ein Transformator erforderlich (Umwandlung 3). Diese dreifache Umwandlung ist mit Verlusten in Höhe ca. 3-3,5% verbunden. Die Kosten für die Komponenten und die Gewichte sind sehr hoch. Die eingesetzten Wechselrichter sind empfindlich gegenüber harmonischen der unteren Spannungsebene. Das Aufschalten von Motoren und nicht linearen Lasten auf die eingesetzten Wechselrichter ist auch problematisch und limitiert. Mithilfe des vorgeschlagenen Energieversorgungssystems, welches einen ersten Gleichspannungsbus und einen zweiten Gleichspannungsbus aufweist, können Verluste reduziert werden.

In einer Ausgestaltung des Energieversorgungssystems weist dieses neben der ersten Energiequelle und der zweiten Energiequelle auch eine dritte Energiequelle auf. Die erste Energiequelle und die zweite Energiequelle sind beispielsweise primäre Energiequellen und die dritte Energiequelle ist eine sekundäre Energiequelle. Die dritte Energiequelle kann beispielsweise zum Peakshaving verwendet werden. Dies bedeutet, dass Spitzen im Energieverbrauch der schwimmenden Einrichtung, welche nicht rasch von der primären Energiequelle gedeckt werden können durch die sekundäre Energiequelle gedeckt werden.

In einer Ausgestaltung des Energieversorgungssystems kann als Energiebus, insbesondere als weiterer Hauptenergiebus oder auch als Ersatz für den DC Bus, zusätzlich zu einem DC Bus auch ein Dreiphasenwechselstrombus (AC Bus) verwendet werden. Auch auf eine Niederspannungsebene kann ein DC Verteilsystem (DC Bus) und/oder ein AC Verteilsystem (AC Bus) verwendet werden.

Ein Energieversorgungssystem für eine wassergebundene Einrichtung, insbesondere eine schwimmende Einrichtung, ist also auch mit einem ersten Gleichspannungsbus für eine erste Gleichspannung und mit einem zweiten Gleichspannungsbus für eine zweite Gleichspannung ausführbar, wobei das Energieversorgungssystem eine erste Energiequelle aufweist, wobei die erste Energiequelle ein Generatorsystem aufweist, welches ein erstes Wicklungssystem zur Speisung des ersten Gleichspannungsbusses aufweist und welches ein zweites Wicklungssystem zur Speisung des zweiten Gleichspannungsbusses aufweist. So können mit einem Generatorsystem verschiedene Spannungsebenen gespeist werden. Weist das Energieversorgungssystem weitere Energiequellen auf, so können auch diese ein derartiges Generatorsystem aufweisen.

In einer Ausgestaltung des Energieversorgungssystem, wobei hier, wie auch bis hier und im Folgenden alle beschriebenen Energieversorgungssysteme gemeint sind, ist das erste Wicklungssystem für eine erste Spannung ausgelegt und das zweite Wicklungssystem für eine zweite Spannung ausgelegt, wobei die erste Spannung größer ist als die zweite Spannung. Das Generatorsystem weist beispielsweise nur einen Generator auf oder z.B. zwei Generatoren. Der Generator ist insbesondere ein Synchrongenerator. Auch aus Synchrongeneratoren können zum Einsatz kommen. Weist der Synchrongenerator ein Niederspannung-Wicklungssystem und ein Mittelspannungsbus-Wicklungssystem auf, so hat dieser insbesondere ein großes Xd". Der dreiphasige Mittelspannungsanschluss des Generators kann beispielsweise an einen Diodengleichrichter oder an einen geregelten Gleichrichter angeschlossen sein und damit den Mittelspannungs-Gleichstrombus zu speisen. Dies gilt in vergleichbarer Weise auch für den dreiphasigen Niederspannungsanschluss für den Niederspannungs-Gleichstrombus. Der Stromrichter für den Niederspannungs- Gleichstrombus kann insbesondere auch ein Active Front End (AFE) sein. Diese weist insbesondere einen Vier Quadranten Bereich auf. Dadurch ist es beispielsweise möglich elektrische Energie aus Batterien in den Niederspannungs-Gleichstrombus zu speisen von dort über das Active Front End in den Mittelspannungs-Gleichstrombus.

In einer Ausgestaltung des Energieversorgungssystems ist das erste Wicklungssystem elektrisch mit dem ersten Gleichspannungsbus zu dessen trafolosen Speisung verbunden. Durch den Wegfall eines Trafos lässt sich Gewicht sparen.

In einer Ausgestaltung des Energieversorgungssystems ist das zweite Wicklungssystem elektrisch mit dem zweiten Gleichspannungsbus zu dessen trafolosen Speisung verbunden. Auch hier wird durch den Wegfall des Trafos Gewicht gespart.

In einer Ausgestaltung des Energieversorgungssystems weist das Generatorsystem einen ersten Generator mit dem ersten Wicklungssystem und einen zweiten Generator mit dem zweiten Wicklungssystem aufweist, wobei der erste Generator und der zweite Generator mittels eines gemeinsamen Wellensystems antreibbar sind. Der erste Generator und der zweite Generator sind insbesondere steif gekoppelt. Durch die Verwendung zweier Generatoren für die zwei Wicklungssysteme lässt sich die Konstruktion der Generatoren einfach halten.

In einer Ausgestaltung des Energieversorgungssystems ist das Generatorsystem ein Multiwicklungssystemgenerator, wobei der Stator des Multiwicklungssystemgenerators das erste Wicklungssystem und das zweite Wicklungssystem aufweist. Derart ist ein kompaktes Generatorsystem ausbildbar.

In einer Ausgestaltung des Energieversorgungssystems weist der Multiwicklungssystemgenerator Nuten auf, welche das erste Wicklungssystem und das zweite Wicklungssystem betreffen. Dadurch kann ein kompakter Aufbau realisiert werden.

In einer Ausgestaltung des Energieversorgungssystems weist die wassergebundene Einrichtung, wie insbesondere die schwimmende Einrichtung, eine ersten Zone auch, eine zweite Zone auf, und eine zweite Energiequelle auf, wobei die erste Energiequelle in der ersten Zone zur Speisung zumindest eines Gleichspannungsbusses der zumindest zwei Gleichspannungsbusse vorgesehen ist und wobei die zweite Energiequelle in der zweiten Zone zur Speisung zumindest eines Gleichspannungsbusses der zumindest zwei Gleichspannungsbusse vorgesehen ist. So kann die Sicherheit der Versorgung der Gleichspannungsbusse mit elektrischer Energie verbessert werden.

Ein Energieversorgungssystem für eine wassergebundene Einrichtung, insbesondere eine schwimmende Einrichtung, ist auch mit einem ersten Gleichspannungsbus für eine erste Gleichspannung und mit einem zweiten Gleichspannungsbus für eine zweite Gleichspannung ausführbar, wobei eine erste Energiequelle zumindest drei speisende elektrische Verbindungen zu den Gleichspannungsbussen aufweist, wobei zumindest einer der Gleichspannungsbusse Abschnitte aufweist. Auch damit kann die Versorgungssicherheit es Energieversorgungssystems verbessert werden.

In einer Ausgestaltung des Energieversorgungssystems speist eine erste speisende Verbindung der zumindest drei speisenden elektrischen Verbindungen einen ersten Abschnitt und eine zweite speisende Verbindung der zumindest drei speisenden elektrischen Verbindungen speist einen zweiten Abschnitt des gleichen Gleichspannungsbusses, wobei eine dritte speisende Verbindung der zumindest drei speisenden elektrischen Verbindungen einen Abschnitt des weiteren Gleichspannungsbusses speist. So kann die Speisung mit elektrischer Energie über verschiedene Gleichspannungsbusse verteilt werden.

In einer Ausgestaltung des Energieversorgungssystems wiest dieses eine vierte speisende Verbindung der ersten Energiequelle, wobei zwei der zumindest vier speisenden Verbindungen zur Speisung des ersten Gleichspannungsbusses in unterschiedlichen Abschnitten des ersten Gleichspannungsbusses vorgesehen sind und wobei zwei weitere der zumindest vier speisenden Verbindungen zur Speisung des zweiten Gleichspannungsbusses in unterschiedlichen Abschnitten des zweiten Gleichspannungsbusses vorgesehen sind. Dies erhöht die Betriebssicherheit der wassergebundenen Einrichtung.

In einer Ausgestaltung des Energieversorgungssystems weist die wassergebundene Einrichtung eine erste Zone und eine zweite Zone auf, wobei sich der erste Gleichspannungsbus und/oder der zweite Gleichspannungsbus über die erste Zone und/oder die zweite Zone erstreckt, wobei die erste Energiequelle zur Speisung von Abschnitten des ersten Gleichspannungsbusses und/oder des zweiten Gleichspannungsbusses in unterschiedlichen Zonen vorgesehen ist. Dadurch kann die Redundanz für die Versorgung der Gleichspannungsbusse mit elektrischer Energie erhöht werden.

In einer Ausgestaltung des Energieversorgungssystems weist dieses eine zweite Energiequelle auf, wobei die erste Energiequelle in der ersten Zone zur Speisung zumindest eines Gleichspannungsbusses der zumindest zwei Gleichspannungsbusse vorgesehen ist und wobei die zweite Energiequelle in der zweiten Zone zur Speisung zumindest eines Gleichspannungsbusses der zumindest zwei Gleichspannungsbusse vorgesehen ist. So können beide Gleichspannungsbusse mit elektrischer Energie versorgt werden, auch wenn nur eine Energiequelle aktiv ist.

In einer Ausgestaltung des Energieversorgungssystems weist ein Abschnitt des ersten Gleichspannungsbusses sowohl eine speisende Verbindung zur ersten Energiequelle, als auch eine weitere speisende elektrische Verbindung zur zweiten Energiequelle, auf. Auch dadurch kann die Flexibilität des Systems verbessert werden.

In einer Ausgestaltung des Energieversorgungssystems weist ein Abschnitt des zweiten Gleichspannungsbusses sowohl eine speisende Verbindung zur ersten Energiequelle, als auch eine weitere speisende elektrische Verbindung zur zweiten Energiequelle, auf. Speisende Verbindungen können hier aber auch im Allgemeinen einen Schalter aufweisen, um die speisende Verbindung (die speisende elektrische Verbindung) flexibel aktivieren bzw. deaktivieren zu können.

In einer Ausgestaltung des Energieversorgungssystems ist zumindest einer der Gleichspannungsbusse als ein Ringbus ausbildbar bzw. ausgebildet. Der Ringbus ist durch Schalter auf trennbar. Insbesondere kann ein Ringbus in zwei kleinere Ringbusse unterteilt werden. Durch die Möglichkeit der Auftrennung des Ringbusses kann flexibel auf Fehler reagiert werden.

In einer Ausgestaltung des Energieversorgungssystems ist der erste Gleichspannungsbus für eine erste Gleichspannung vorgesehen und der zweite Gleichspannungsbus für eine zweite Gleichspannung vorgesehen, wobei die erste Gleichspannung größer ist als die zweite Gleichspannung. Insbesondere ist die kleinere Spannung eine Niederspannung (LV) und die höhere Spannung eine Mittelspannung (MV). Die Niederspannung ist insbesondere zwischen 400V und 1000V. Die Mittelspannung ist größer 1000V, insbesondere zwischen 10kV und 20kV. Als Werte für die Mittelspannung bieten sich beispielsweise folgende an: 5kV, 6kV, 12kV und 18kV.

In einer Ausgestaltung des Energieversorgungssystems ist der erste Gleichspannungsbus mit dem zweiten Gleichspannungsbus beispielsweise über zumindest einer der folgenden Kopplungen verbunden:
o DC/DC-Wandler
o Wechselrichter - Transformator - Gleichrichter

In einer Ausgestaltung des Energieversorgungssystems ist also die erste Gleichspannung größer als die zweite Gleichspannung. Insbesondere ist die erste Gleichspannung eine Mittelspannung (MV: Medium Voltage - Mittelspannung) und die zweite Gleichspannung eine Niederspannung (LV: Low Voltage - Niederspannung), wobei eine Energieübertragung vom ersten Gleichspannungsbus zum zweiten Gleichspannungsbus möglich ist wie auch eine Energieübertragung vom zweiten Gleichspannungsbus zum ersten Gleichspannungsbus möglich ist. Dies erhöht die Flexibilität, Einsatzfähigkeit und Fehlertoleranz des Energieversorgungssystems.

In einer Ausgestaltung des Energieversorgungssystems ist der erste Gleichspannungsbus für eine erste Gleichspannung vorgesehen und der zweite Gleichspannungsbus ist für eine zweite Gleichspannung vorgesehen, wobei die erste Gleichspannung größer ist als die zweite Gleichspannung. So können Verbraucher wie Motoren, Elektronik, Heizungen, etc. über einer geeigneten Spannungsebene mit elektrischer Energie versorgt werden.

In einer Ausgestaltung des Energieversorgungssystems ist zumindest einer der Gleichspannungsbusse für eine Erstreckung über zumindest zwei Zonen vorgesehen. Dadurch kann zum Beispiel eine Zone mit elektrischer Energie versorgt werden, welche selbst keine Energiequelle hat.

In einer Ausgestaltung des Energieversorgungssystems ist mittels eines Bypasses eine Zone überbrückbar. So kann beispielsweise eine Zone, welche unter Wasser steht oder, in der Feuer ausgebrochen ist, von der elektrischen Versorgung getrennt werden ohne dass eine weitere Zone, in welche der entsprechende Bus reicht, beeinträchtigt ist.

In einer Ausgestaltung des Energieversorgungssystems weist zumindest einer der Gleichspannungsbusse Abschnitte auf, wobei die Abschnitte zonenbezogen sind. Die Abschnitte sind voneinander beispielsweise mittels Schalter trennbar. Ein Schalter kann dabei ein mechanischer Schalter und/oder ein mechanischer und Halbleiterschalter sein.

In einer Ausgestaltung des Energieversorgungssystems können zwei Zonen zwei Abschnitte aufweisen. In einer weiteren Ausgestaltung kann eine Zone zwei Abschnitte vom gleichen Bus aufweisen. In einer weiteren Ausgestaltung weist jede Zone mit einem Abschnitt eine eigene Energiequelle auf.

In einer Ausgestaltung des Energieversorgungssystems ist die erste Energiequelle in der ersten Zone zur Speisung des ersten Gleichspannungsbusses und des zweiten Gleichspannungsbusses vorgesehen. So können in einer Zone beispielsweise beide Spannungsebenen mit Energie versorgt werden.

In einer Ausgestaltung des Energieversorgungssystems ist der erste Gleichspannungsbus zur Speisung des zweiten Gleichspannungsbusses vorgesehen. So kann durch eine Energiequelle, welche an dem ersten Gleichspannungsbus angeschlossen ist, auch der zweite Gleichspannungsbus mit Energie versorgt werden.

In einer Ausgestaltung des Energieversorgungssystems weist dieses einen Drehstrombus auf, wobei der zweite Gleichspannungsbus zur Speisung des Drehstrombusses vorgesehen ist. Dabei kann der Drehstrombus sich über zumindest zwei Zonen erstrecken oder auf eine Zone begrenzt sein. In einer Ausgestaltung ist es auch möglich, dass durch den Drehstrombus eine oder mehr Zonen überbrückt werden, d.h. es gibt einen Bypass zumindest einer Zone. Der Drehstrombus (Wechselstrom) ist zur Versorgung von Wechselstromversorgern vorgesehen. Dies können beispielsweise in einem Kreuzfahrtschiff auch an Steckdosen anschließbare Küchengeräte wie Toaster, Waffeleisen oder Kaffeemaschinen sein.

In einer Ausgestaltung des Energieversorgungssystems ist es möglich, insbesondere abhängig von einer Schiffsapplikationen, zu einem Mittelspannungs-DC Verteilnetz zumindest teilweise ein AC Verteilnetztes auf der Niederspannungsebene zu integrieren oder einzelne DC-Inseln innerhalb der Zonen auszubilden, die zwischen den Zonen über AC-Verbindungen verbunden sind. In einer Ausgestaltung des Energieversorgungssystems sind einzelne DC-Inseln über DC/DC Konverter miteinander verbunden.

In einer Ausgestaltung des Energieversorgungssystems ist eine Zone autark betreibbar, wobei diese autarke Zone zumindest eine der Energiequellen aufweist, wobei der erste Gleichspannungsbus und/oder der zweite Gleichspannungsbus speisbar sind, wobei der erste Gleichspannungsbus und der zweite Gleichspannungsbus mit ihrem jeweiligen Abschnitt in dieser Zone auch verbleiben. Ein Abschnitt geht also nicht über eine Zone hinaus. So können innerhalb einer schwimmenden Einrichtung autarke Bereiche errichtet werden, welche auch bei Ausfall oder Beschädigung einer der Zonen der schwimmenden Einrichtung für sich arbeitsfähig sind.

In einer Ausgestaltung des Energieversorgungssystems weist die schwimmende Einrichtung zumindest zwei Längszonen und zumindest zwei Querzonen auf, wobei zwei Abschnitte zumindest eines Gleichspannungsbusses in derselben Querzone sind und auch in unterschiedlichen Längszonen. So können beispielsweise Fehler, welche auf einer Seite eines Schiffes auftreten, bezüglich der Auswirkung auf die elektrische Energieversorgung begrenzt werden. Die Längszone ist beispielsweise durch ein Längsschott begrenzt. Die Querzone ist beispielsweise durch ein Querschott begrenzt.

In einer Ausgestaltung des Energieversorgungssystems weist zumindest einer der Gleichspannungsbusse eine Schalteinrichtung (Schalter) auf. Die Schalteinrichtung, welche mechanisch und/oder elektrisch durch Halbleiter arbeitet, dient zum Trennen bzw. Verbinden von Abschnitten der jeweiligen Busse. Das Auslösen der Schalteinrichtung zum Trennen bzw. Verbinden kann aufgrund von Schaltbefehlen erfolgen, welche aufgrund eines elektrischen Zustandes generiert werden und/oder aufgrund von Schaltbefehlen erfolgen, welche aufgrund von Ereignissen in einer Zone generiert werden (z.B. Wassereinbruch, Feuer, etc.).

In einer Ausgestaltung des Energieversorgungssystems ist die Schalteinrichtung im Gleichspannungsbus ein Kurzschlussschalter. Die Schalteinrichtung trennt insbesondere zwei Zonen. Die Schalteinrichtung ist beispielsweise ein Schnellschalter, der eine sichere Trennung von Abschnitten eines Busses ermöglicht. So kann ein Kurzschluss in einer Zone auf diese Zone begrenzt werden. Andere Zonen bleiben von einem Kurzschluss in einer der Vielzahl von Zonen weitestgehend unberührt. Ein Herunterfahren und wieder hochfahren der Energieversorgung im Falle eines Kurzschlusses ist damit vermeidbar. Die Wahrscheinlichkeit eines Blackouts für die gesamte schwimmende Einrichtung kann damit reduziert werden.

In einer Ausgestaltung des Energieversorgungssystems ist zumindest eine Verbrennungskraftmaschine eine Gasturbine. Gasturbinen ermöglichen hohe Drehzahlen und eine kompakte Bauweise.

In einem Verfahren zum Betrieb eines Energieversorgungssystems einer schwimmenden Einrichtung, wobei die schwimmende Einrichtung eine erste Zone und eine zweite Zone aufweist, wobei die schwimmende Einrichtung einen ersten Gleichspannungsbus für eine erste Gleichspannung und einen zweiten Gleichspannungsbus für eine zweite Gleichspannung aufweist, wobei die schwimmende Einrichtung eine erste Energiequelle und eine zweite Energiequelle aufweist, wird elektrische Energie von der ersten Zone in die zweite Zone oder von der zweiten Zone in die erste Zone übertragen. So können Zonen beispielsweise unabhängig davon, ob diese eine Energiequelle aufweisen mit elektrischer Energie versorgt werden.

Bei einem Verfahren zum Betrieb eines Energieversorgungssystems für eine wassergebundene Einrichtung, mit einem ersten Gleichspannungsbus für eine erste Gleichspannung und mit einem zweiten Gleichspannungsbus für eine zweite Gleichspannung, mit einer ersten Energiequelle, wobei die erste Energiequelle ein Generatorsystem aufweist, welches ein erstes Wicklungssystem zur Speisung des ersten Gleichspannungsbusses aufweist und welches ein zweites Wicklungssystem zur Speisung des zweiten Gleichspannungsbusses aufweist, wird mittels des ersten Wicklungssystems eine erste Spannung erzeugt und mittels des zweiten Wicklungssystems eine zweite Spannung erzeugt, wobei die zweite Spannung kleiner ist als die erste Spannung, wobei zum Antrieb des Generatorsystems ein Diesel oder eine Gasturbine verwendet wird. Dieses wie auch weitere Verfahren können durch weitere Ausgestaltungen ergänzt und/oder kombiniert werden.

In einer Ausgestaltung des Verfahrens wird die Speisung durch das erste Wicklungssystem oder die Speisung durch das zweite Wicklungssystem unterbunden. So kann beispielsweis bei einem Kreuzfahrtschiff in einem Hafen dessen Hotellast über nur ein Wicklungssystem bedient werden.

Bei einem Verfahren zum Betrieb eines Energieversorgungssystems für eine wassergebundene Einrichtung, mit einem ersten Gleichspannungsbus für eine erste Gleichspannung und mit einem zweiten Gleichspannungsbus für eine zweite Gleichspannung, mit einer ersten Energiequelle, welche zumindest drei speisende elektrische Verbindungen zu den Gleichspannungsbussen aufweist, wobei zumindest einer der Gleichspannungsbusse Abschnitte aufweist, werden die Gleichspannungsbusse mit elektrischer Energie versorgt. Die speisenden elektrischen Verbindungen weisen beispielsweise Schalter auf, um die Verbindung zu trennen oder zu schließen. So können beispielsweise fehlerhafte Bereiche (z.B. durch einen Kurzschluss) des Energieversorgungssystems von korrekt arbeitenden Bereichen getrennt werden.

In einer Ausgestaltung des Verfahrens wird ein hier beschriebenes Energieversorgungssystem bei der Durchführung des Verfahrens verwendet.

In einer Ausgestaltung zumindest eines der Verfahren wird im Fall einer Störung ein Schott geschlossen und zumindest einer der Gleichstrombusse wird schottabhängig getrennt. So kann insbesondere im Fall einer Störung diese Störung auf eine Zone beschränkt werden.

In einer Ausgestaltung zumindest eines der Verfahren wird ein erstes Energiemanagement für zumindest die erste Zone durchgeführt und ein zweites Energiemanagement für zumindest die zweite Zone. So kann beispielsweise jede Zone, welche eine Energiequelle aufweist, ein Energiemanagement durch ein Energiemanagementsystem aufweisen, wobei die Energiemanagementsysteme unterschiedlicher Zonen miteinander datentechnisch verbindbar sind. Insbesondere kann ein Master Energiemanagementsystem definiert sein, welches den Energiefluss zwischen den Zonen, welche von den einzelnen Energiemanagement Systemen verwaltet werden, steuert und/oder regelt. Zur Datenübertragung kann ein kabelgebundenes bzw. ein funkbasiertes Übertragungssystem verwendet werden. Durch das funkbasierte Übertragungssystem können Störungen, welche beispielsweise durch mechanische Schäden innerhalb einer Zone auftreten, besser gemeistert werden.

In einer Ausgestaltung zumindest eines der Verfahren kann dieses mit jeder der hier beschriebenen Ausgestaltungen und Kombinationen des Energieversorgungssystems verwendet werden. Durch die hohe Flexibilität des Verfahrens bzw. des Energieversorgungssystems ist ein flexibler Betrieb der schwimmenden Einrichtung möglich.

Mit dem hier beschriebenen Energieversorgungssystem kann eine Netzwerksarchitektur für leistungsstarke Schiffsbordnetze mit mindestens zwei Spannungsebenen realisiert werden. In DC Netzen ist die elektrische Energie gleichgerichtet und über den gemeinsamen DC Bus verteilt. Große AC Verbraucher, wie z.B. Haupt- und Hilfsantriebe, werden über Wechselrichter aus dem DC Bus gespeist. AC Unternetze benötigen einen Wechselrichter und einen Transformator. Die Spannung kann wie bei einem herkömmlichen AC Hauptnetz über das Übersetzungsverhältnis des Transformators gewählt werden. Die Frequenz ist unabhängig von der Drehzahl der Generatoren durch den Wechselrichter einstellbar. Durch den vermehrten Einsatz von Gleichspannungsbussen können die in den AC Netzen vorhandenen Probleme bezüglich eines hohen Gewichts der Transformatoren und unterschiedliche Frequenzen der Netze in Bezug zum Generator vermieden werden. Beim Einsatz einer DC Netzwerkarchitektur mit mindestens zwei DC Spannungsebenen (Mittelspannung (MV) und Niederspannung (LV)) wird die Notwendigkeit des Einsatzes von Transformatoren reduziert. Die Netzwerksarchitektur zeichnet sich insbesondere durch mindestens zwei DC Bussysteme (LV und MV) aus, die als geschlossener Bus ausgeprägt sein können.

Diese DC Ring-Busse werden insbesondere ermöglicht durch Verwendung eines sehr schnellen Halbleiter-Schalters für LV und MV um die Integrität der einzelnen Busabschnitte in den Zonen im Fehlerfall sicherzustellen. Dadurch wird vermieden, dass fehlerhafte Busabschnitte zu Ausfällen anderer Busabschnitte führen. Die Integration eines LV DC Ring-Busses zusätzlich zu einem MV Ring-Bus ermöglicht die Anbindung von dezentralen Energiespeichersystemen an dem LV DC Ring-Bus und durch den geschlossenen Bus die Nutzung und Verteilung der Energie. Dabei stellen die dezentralen Energiespeichersystemen insbesondere sekundäre Energiequellen dar. Der Einsatz mehrerer geschlossener DC Ring-Busse ermöglicht insbesondere auch eine bessere Möglichkeit der Leistungsaufteilung zwischen den Ring-Bussen der unterschiedlichen Spannungsebenen. Eine Möglichkeit der Verbindung der verschiedenen Spannungsebenen besteht über eine DC/DC Konverter. Eine andere Möglichkeit liegt darin, auf der AC Seite des Generators über einen Trafo und einen Gleichrichter den weiteren DC Ring-Bus zu versorgen während der DC Ring-Bus mit der höheren Leistung / höheren Spannung direkt über eine Gleichrichter versorgt wird. In dem Fall, dass Energie Speicher an dem Niederspannungs- DC Ring Bus angeschlossen sind, kann der Gleichrichter des Niederspannungs- Ring-Busses auch als aktiver Inverter ausgeführt werden um den Energiefluss in beide Richtungen zu ermöglichen. Die Einspeisung des Generators über Gleichrichter oder gesteuerte Gleichrichter ermöglicht auch eine höhere Frequenz der Generator Ausgangsspannung, was den erforderlichen Transformator in Gewicht und Abmessung verkleinert.

In einer Ausgestaltung des Energieversorgungssystems weist ein Generator zumindest zwei Spannungsebenen auf. Damit ist eine weitere Optimierung des Systems und eine Vermeidung eines schweren Transformators möglich. Durch den Einsatz von Generatoren mit mindestens zwei Spannungsebenen kein eine erste Spannungsebene und eine zweite Spannungsebene versorgt werden. Dies betrifft insbesondere den ersten Gleichspannungsbus und den zweiten Gleichspannungsbus gleich, welche jeweils über Gleichrichter mit dem Generator verbunden sind.

Dadurch kann die mehrfache Umwandlung von Energie wie bei AC Netzen vermieden werden. Sinnvoll sind dabei Anordnungen, welche die obere und die zweite Spannungsebene abdecken, da die Leistungen in der 2ten und weiteren unteren Spannungsebenen immer weiter abnehmen.

In einer Ausgestaltung des Energieversorgungssystems kann die Generatorfrequenz in gewissen Grenzen frei gewählt werden. Bei Einsatz von Generatoren mit separaten Wicklungen sind auch unterschiedliche Frequenzen für die unterschiedlichen Spannungen möglich. Die Frequenzen und andere Maschinenparameter haben Einfluss auf die Stabilität des zugeordneten DC Netzes. Die beiden Spannungsebenen werden durch unterschiedliche Generatorwicklungen bzw. Aktivteile unabhängig voneinander gespeist. Es ist dabei unerheblich, ob die Aktivteile in einem Gehäuse auf einer Welle oder in Tandemanordnung aufgestellt werden. Auch der Betrieb an zwei Wellenenden ist möglich.

In einer Ausgestaltung des Energieversorgungssystems ist die Aktivteillänge des Generators verkürzt. Ein Generator kann so beispielsweise zwei unterschiedliche Aktivteillänge aufweisen. Dies gelingt beispielsweise durch die Verwendung neuer Fertigungstechnologien wie dem 3D Druck. Mögliche Einsparungen ergeben sich beispielsweise im Bereich der Wickelköpfe. Damit werden auch Generatoren sinnvoll, die trotz mehrerer hintereinander liegender Wicklungen nicht oder nur unwesentlich länger werden.

Durch einen neuen Netzwerkarchitektur für Schiffe mit großen Bordnetzleistungen (z.B. Kreuzfahrtschiffe, Navy (neue Klassen mit erhöhten Bedarf an elektrischer Leistung zusätzlich zu den Antriebsleistungen, FPSO; FSRU; ... )) kann mit der Integration mehrerer geschlossener DC Ring-Busse auf unterschiedlichen Spannungsebenen eine effiziente Energieversorgung realisiert werden. Der verstärkte Einsatz von DC Bussen ermöglicht die Reduzierung von Verteilertransformatoren, welche für AC Netze notwendig sind.

Auf Basis einer der beschriebenen Ausgestaltungen des Energieversorgungssystems kann in der schwimmenden Einrichtung auf eine Umwandlung AC/DC/AC in der oberen Spannungsebene verzichtet werden und die Umwandlung DC/AC/DC zwischen den Spannungsebenen vereinfacht werden. Ist das Unternetz, also das Netz mit einer niedrigeren Spannung, ein DC Netz, kann die Frequenz der speisenden AC Spannung optimal gewählt werden.

Der Einsatz mehrerer DC Ring-Busses mit verschiedenen Spannungseben wird durch schnell schaltende Halbleiterschalter sichergestellt und ermöglicht eine optimalere und sichere Lastverteilung zwischen den Bussen und eine optimalere Verteilung und Nutzung von Energiespeichern zwischen den einzelnen Zonen. Die Verbraucher der zweiten und darunter liegenden Spannungsebene können mit einer festen, frei vergebbaren Frequenz, gespeist werden, die nicht von der Drehzahl der Dieselgeneratoren abhängig ist, auch wenn die obere Spannungsebene mit variabler Frequenz betrieben wird.

In herkömmlichen Netzen werden die Verteiltransformatoren für die zweiten Spannungsebenen redundant ausgelegt. Beträgt die Hotelleistung zum Beispiel 10MW beträgt die installierte Summenleistung der Verteiltransformatoren mindesten 20MW. Aufgrund von zusätzlichen Sicherheiten und unter Berücksichtigung von Gleichzeitigkeitsfaktoren erhöht sich dieser Wert noch einmal deutlich auf Werte zwischen 25 und 30MW. Die Generatoren für die zweite Spannungsebene müssen aber in Summe nur für die 20MW ausgelegt werden. Gleichzeitig verringert sich die installierte Generatorleistung um den Anteil der Bordnetzleistung. Im Beispiel also um 10MW. In Summe müssen also 10MW mehr an Generatorleistung installiert werden um ca. 25-30MW zu installierende Transformatorleistung zu einzusparen.

Die verschiedenen beschriebenen Energieversorgungssysteme bzw. wassergebundenen Einrichtungen, wie auch die beschriebenen Verfahren können in ihren Merkmalen variabel kombiniert werden. Dadurch lässt sich das entsprechende System, die entsprechende Einrichtung bzw. Verfahren z.B. an einen Einsatz in einem Kreuzfahrtschiff, einem Kranschiff, einer Ölplattform, etc. anpassen.

Die Erfindung wird nachfolgend beispielhaft anhand von Figu-ren beschrieben. Dabei werden für gleichartige Einheiten die gleichen Bezugszeichen verwendet. Es zeigt:
- FIG 1: ein Schiff mit einer ersten Unterteilung in Zonen,
- FIG 2: ein Schiff mit einer zweiten Unterteilung in Zonen,
- FIG 3: ein Schiff mit einer dritten Unterteilung in Zonen,
- FIG 4: einen ersten Schaltplan für ein Energieversorgungssystem,
- FIG 5: einen zweiten Schaltplan für ein Energieversorgungssystem,
- FIG 6: einen dritten Schaltplan für ein Energieversorgungssystem,
- FIG 7: einen vierten Schaltplan für ein Energieversorgungssystem,
- FIG 8: einen fünften Schaltplan für ein Energieversorgungssystem,
- FIG 9: einen sechsten Schaltplan für ein Energieversorgungssystem,
- FIG 10: einen siebten Schaltplan für ein Energieversorgungssystem,
- FIG 11: Wicklungssysteme,
- FIG 12: eine Ersatzschaltung,
- FIG 13: einen achten Schaltplan für ein Energieversorgungssystem,
- FIG 14: einen neunten Schaltplan für ein Energieversorgungssystem,
- FIG 15A: Teil A eines zehnten Schaltplans für ein Energieversorgungssystem
- FIG 15B: Teil B des zehnten Schaltplans für ein Energieversorgungssystem und
- FIG 16 bis 24: weitere Ausgestaltungen von Energieversorgungssystemen.

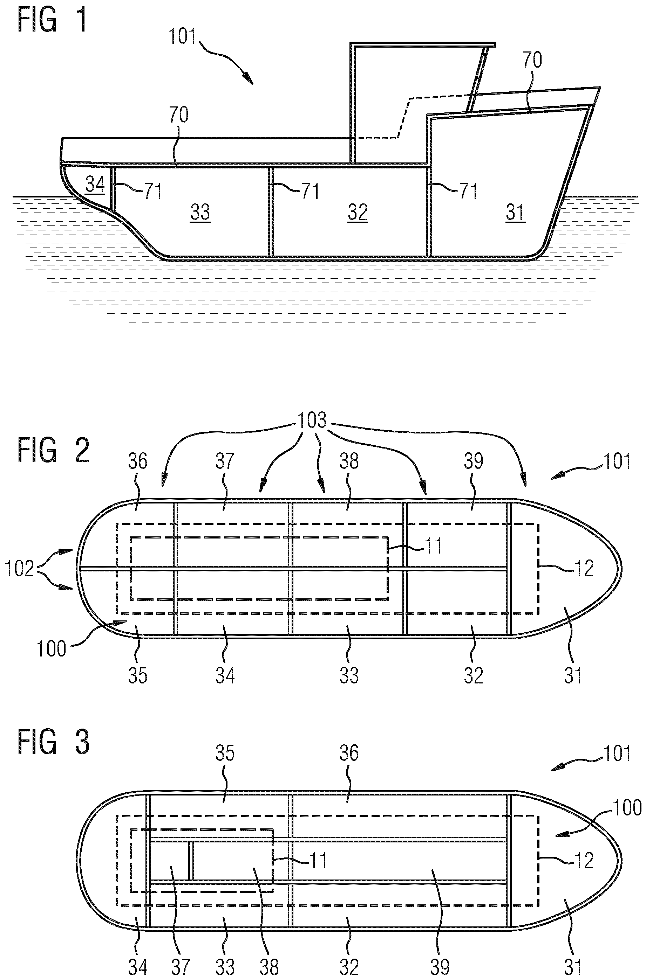

Die Darstellung nach FIG 1 zeigt ein Schiff 101 mit einer ersten Unterteilung in Zonen. Dargestellt ist eine erste Zone 31, eine zweite Zone 32, eine dritte Zone 33 und eine vierte Zone 34. Diese Zonen werden von Schotten 71 und einem wasserdichten Deck 70 begrenzt.

Die Darstellung nach FIG 2 zeigt ein Schiff 101 in einer Art Aufsicht, mit einer zweiten Unterteilung in Zonen 31 bis 39. Die Zonen können auch in Längszonen 102 und Querzone 103 unterteilt werden. Über die Zonen erstreckt sich ein Energieversorgungssystem 100. Das Energieversorgungssystem weist einen ersten Gleichspannungsbus 11 und einen zweiten Gleichspannungsbus 12 auf. Die Gleichspannungsbusse 11 und 12 erstrecken sich unterschiedlich über die Zonen.

Die Darstellung nach FIG 3 zeigt ein Schiff 100 mit einer dritten Unterteilung in Zonen 31 bis 39, wobei die Zonen 37, 38 und 39 zentrale Zonen innerhalb des Schiffes sind und backbordseitig bzw. steuerbordseitig von weiteren Zonen begrenzt sind. Das Energieversorgungssystem 100 weist einen ersten Gleichspannungsbus 11 und einen zweiten Gleichspannungsbus 12 auf, wobei der erste Gleichspannungsbus 11 beispielsweise ein Mittelspannungsbus ist und der zweite Gleichspannungsbus 12 ein Niederspannungsbus ist.

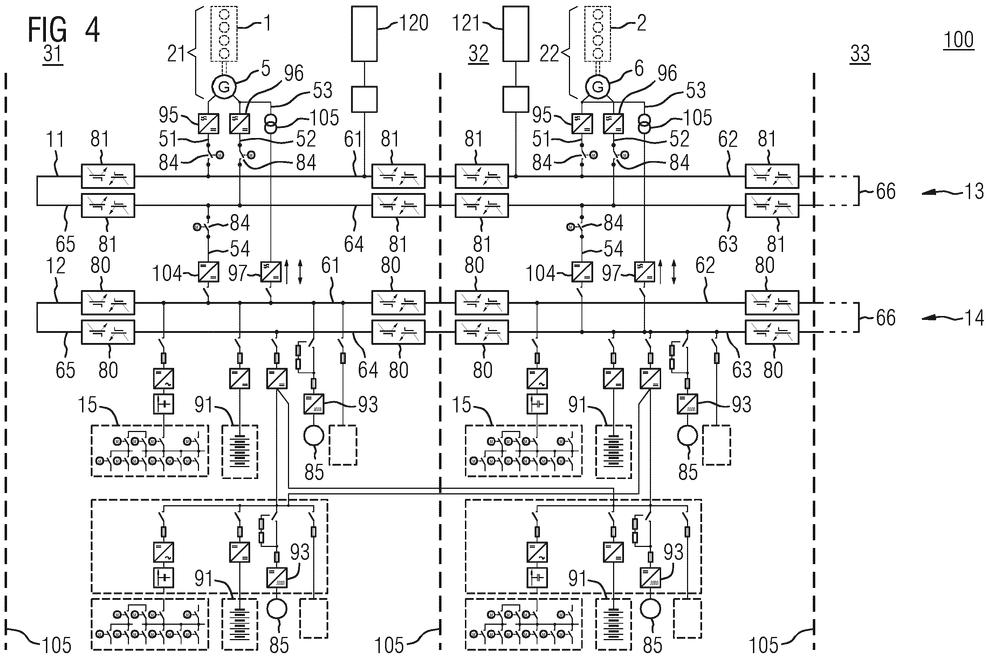

Die Darstellung nach FIG 4 zeigt einen ersten Schaltplan für ein Energieversorgungssystem 100. Die Darstellung weist eine erste Zone 31, eine zweite Zone 32 und eine dritte Zone 33 auf. Die Zonen sind durch Zonengrenzen 105 markiert. In der ersten Zone 31 befindet sich eine erste Energiequelle 21. Die erste Energiequelle 21 weist einen Diesel 1 und einen Generator 5 auf. In der zweiten Zone 32 befindet sich eine zweite Energiequelle 22. Die zweite Energiequelle 22 weist einen Diesel 2 und einen Generator 6 auf. Ein erster Gleichspannungsbus 11 erstreckt sich sowohl in die erste Zone 31, wie auch in die zweite Zone 32 und auch in die dritte Zone 33 und bildet dabei eine Ringbus aus. Ein zweiter Gleichspannungsbus 12 erstreckt sich sowohl in die erste Zone 31, wie auch in die zweite Zone 32 und auch in die dritte Zone 33 und bildet dabei auch einen Ringbus aus. Der erste Gleichspannungsbus 11 befindet sich in einer ersten Gleichspannungsebene 13 bzw. stellt diese zur Verfügung. Der zweite Gleichspannungsbus 12 befindet sich in einer zweiten Gleichspannungsebene 14 bzw. stellt diese zur Verfügung. Der erste Gleichspannungsbus 11 ist in Abschnitte 61 bis 66 unterteilbar. Die Unterteilung gelingt mittels MV-Schalteinrichtungen 81. Der erste Gleichspannungsbus 11 ist also auf einer Mittelspannung. Der zweite Gleichspannungsbus 12 ist auch in Abschnitte 61 bis 66 unterteilbar. Die Unterteilung gelingt mittels LV-Schalteinrichtungen 80. Der zweite Gleichspannungsbus 12 ist also auf einer Niederspannung. Über den zweiten Gleichspannungsbus 12 ist ein Drehstrombus (AC-Bus) 15 speisbar. An dem zweiten Gleichspannungsbus 12 sind auch Batterien 91 angeschlossen. Als Verbraucher für den zweiten Gleichspannungsbus 12 sind Motoren (Asynchronmotoren) 85 gezeigt, welche über Wechselrichter 93 betreibbar sind. Zur Speisung der Gleichspannungsbusse 11 und 12 sind jeweils eine erste Speisung 51, eine zweite Speisung 52, eine dritte Speisung 53 und eine vierte Speisung 54 vorgesehen. Diese Speisungen sind speisende elektrische Verbindungen für die Gleichstrombusse. Der Generators 5 speist über die erste Speisung 51 den ersten Abschnitt 61, wobei die erste Speisung 51 einem Gleichrichter 95 und einen Schalter 84 aufweist. Der Generator 5 speist über die zweite Speisung 52 den vierten Abschnitt 64 des ersten Gleichspannungsbusses 11. Die zweite Speisung 52 in der ersten Zone 31 weist ebenso einen Gleichrichter 96 und einen Schalter 84 auf. Die dritte Speisung 53 weist einen Mittelspannungstransformator 105 und einen Gleichrichter 97 auf. Die dritte Speisung 53 speist den ersten Abschnitt 61 des zweiten Gleichspannungsbusses 12. die vierte Speisung 54 weist einen Schalter 84 und einen DC/DC-Steller 104 auf. Damit verbindet die vierte Speisung 54 ein Abschnitt 64 des ersten Gleichstrombusses 11 mit einem Abschnitt 61 des zweiten Gleichstrombusses 12. In der zweiten Zone 32 erfolgt der Anschluss des Generators 6 an die Gleichstrombusse 11 und 12 in gleicher Weise über die Speisungen 1 bis 4, wie in der ersten Zone 31 beschrieben.

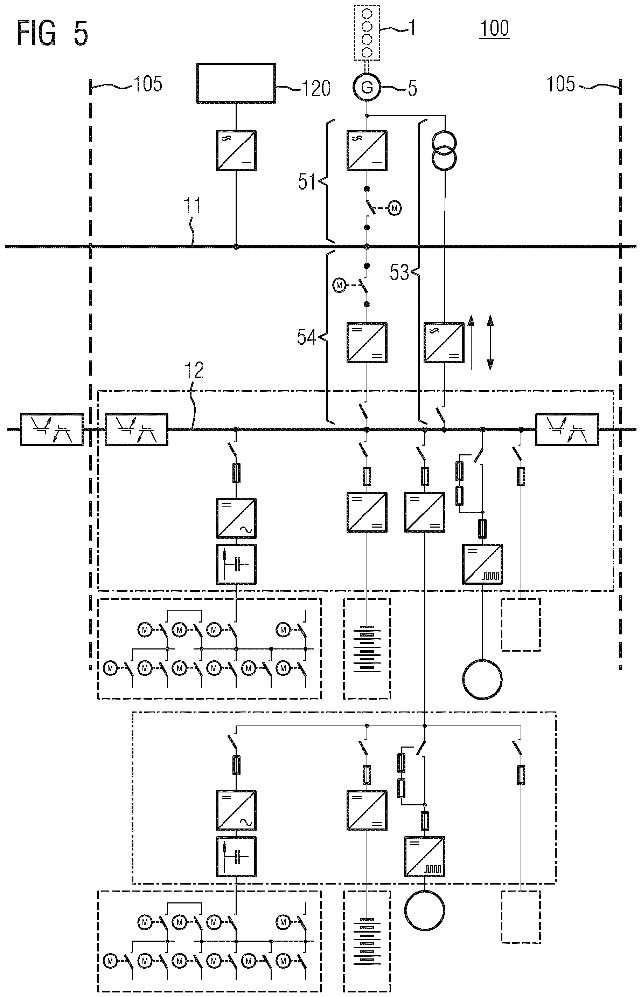

Die Darstellung nach FIG 5 zeigt einen zweiten Schaltplan für ein Energieversorgungssystem 100 Dabei ist im Vergleich zu FIG 4 ein vergrößerter Ausschnitt gezeigt. Im Gegensatz zu FIG 4 ist in FIG 5 zur Darstellung einer Variation ein Generator 5 gezeigt, welcher nur drei speisende elektrische Verbindungen 51, 53 und 54 zu den Gleichstrombusse 11 und 12 aufweist.

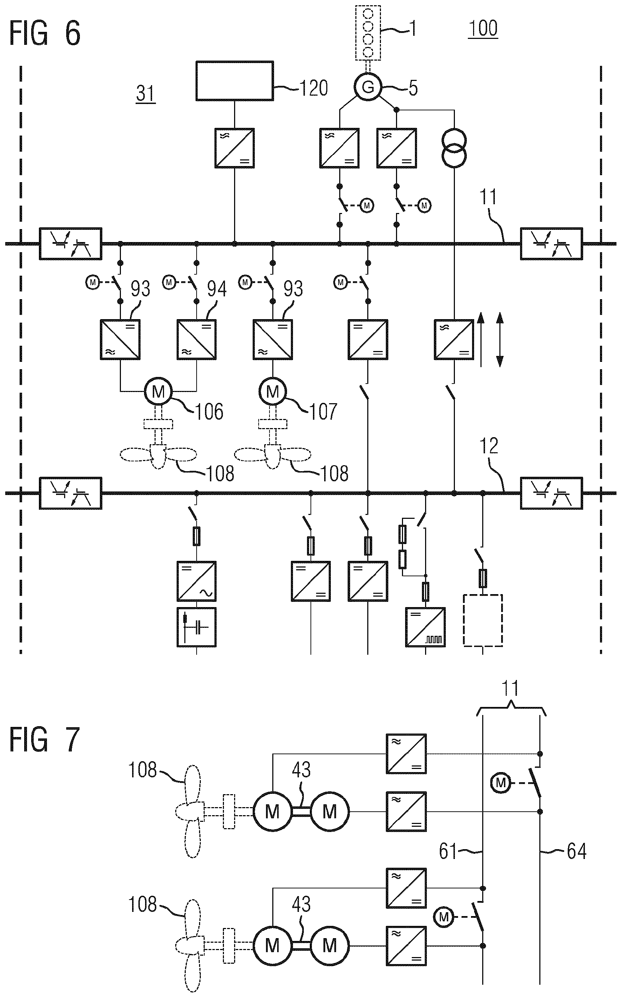

Die Darstellung nach FIG 6 zeigt einen dritten Schaltplan für ein Energieversorgungssystem 100. Dabei ist gezeigt, dass als Verbraucher an dem ersten Gleichspannungsbus 11 Schiffsantriebsmotoren 106, 107 angeschlossen sein können, welche jeweils zum Antrieb eines Propellers 108 vorgesehen sind. Der Motor 106 ist über die Wechselrichter 93 und 94 doppelt gespeist. Der Motor 107 ist einfach gespeist.

Die Darstellung nach FIG 7 zeigt einen vierten Schaltplan, wobei mit den Propellern 108 jeweils zwei Motoren über ein Wellensystem 43 zum Antrieb verbunden sind. Auch hier erfolgt die Speisung über den Gleichspannungsbus 11, aber über verschieden Abschnitten 61 und 64 dieses Busses.

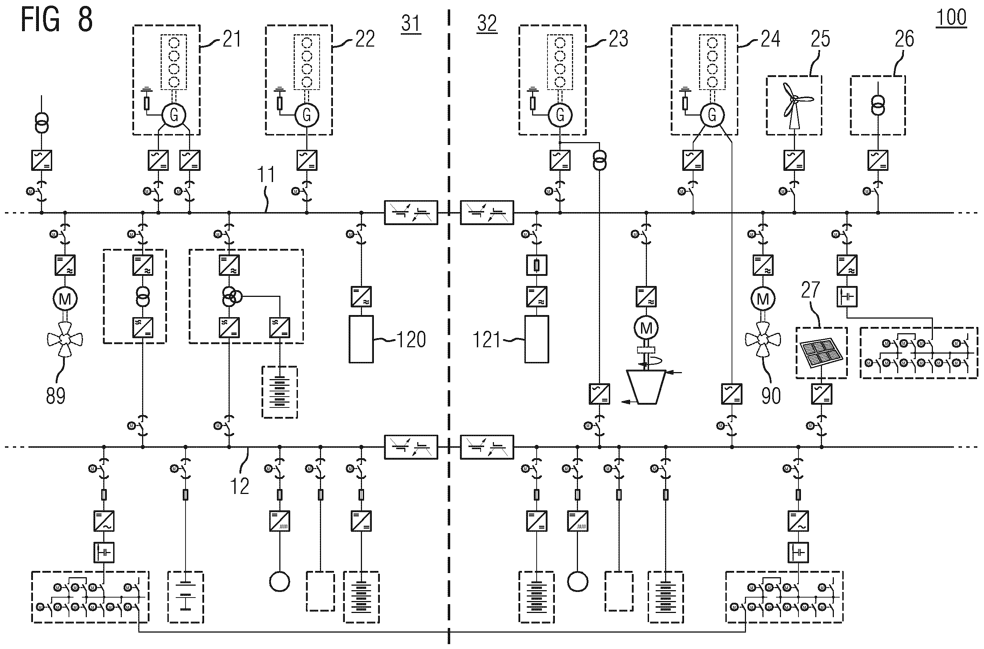

Die Darstellung nach FIG 8 zeigt einen fünften Schaltplan, wobei neben vier Energiequellen 21 bis 24 mit Diesel auch alternative Energiequellen gezeigt sind. Ein Windrad 25 kann eine Energiequelle sein. Ein Landanschluss 26 kann eine Energiequelle sein aber auch eine Photovoltaikanlage 27.

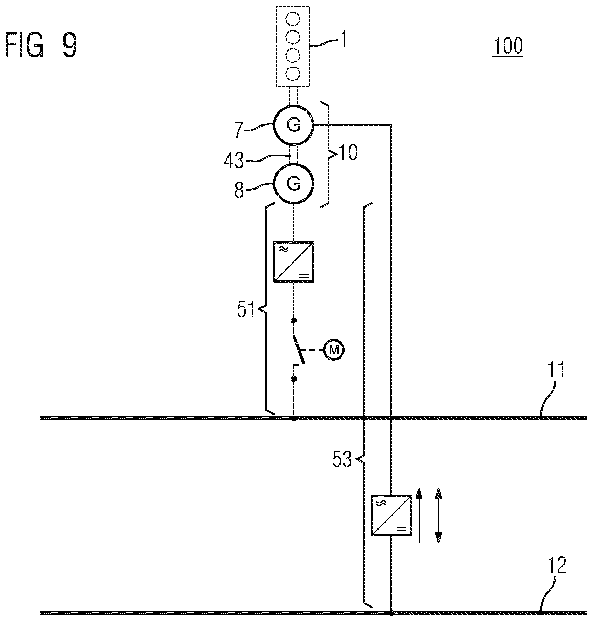

Die Darstellung nach FIG 9 zeigt ein Generatorsystem 10 mit zwei Generatoren 7 und 8, welche über ein Wellensystem 43 steif gekoppelt sind. Der Generator 7 weist hier ein Niederspannungswicklungssystem auf und der Generator 8 weist ein Mittelspannungswicklungssystem auf. Mittels des Generators 7 wird ein Niederspannungsgleichstrombus 12 gespeist und mittels des Generators 8 wird ein Mittelspannungsgleichstrombus 11 gespeist.

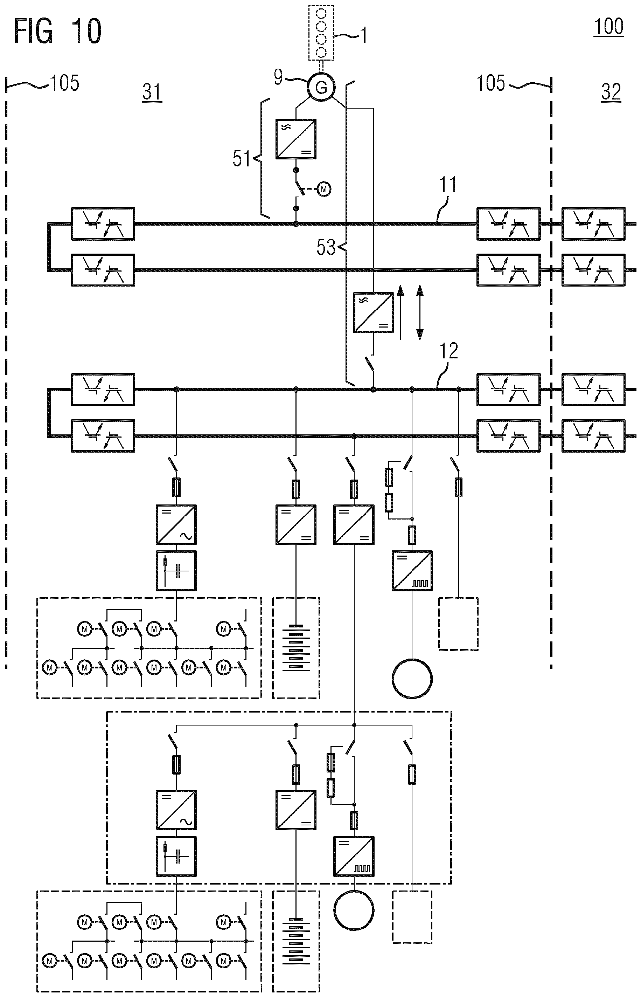

Die Darstellung nach FIG 10 zeigt einen Multiwicklungssystemgenerator 9 welcher zumindest zwei Wicklungssysteme aufweist, ein erstes Wicklungssystem für eine Mittelspannung und ein zweites Wicklungssystem für eine Niederspannung. Mittels des erste Wicklungssystems erfolgt über eine erste speisende elektrische Verbindung 51 die Speisung des ersten Gleichstrombusses 11 auf der Mittelspannungsebene (MV). Mittels des zweiten Wicklungssystems erfolgt über eine weitere speisende elektrische Verbindung 53 die Speisung des zweiten Gleichstrombusses 12 auf der Niederspannungsebene (LV).

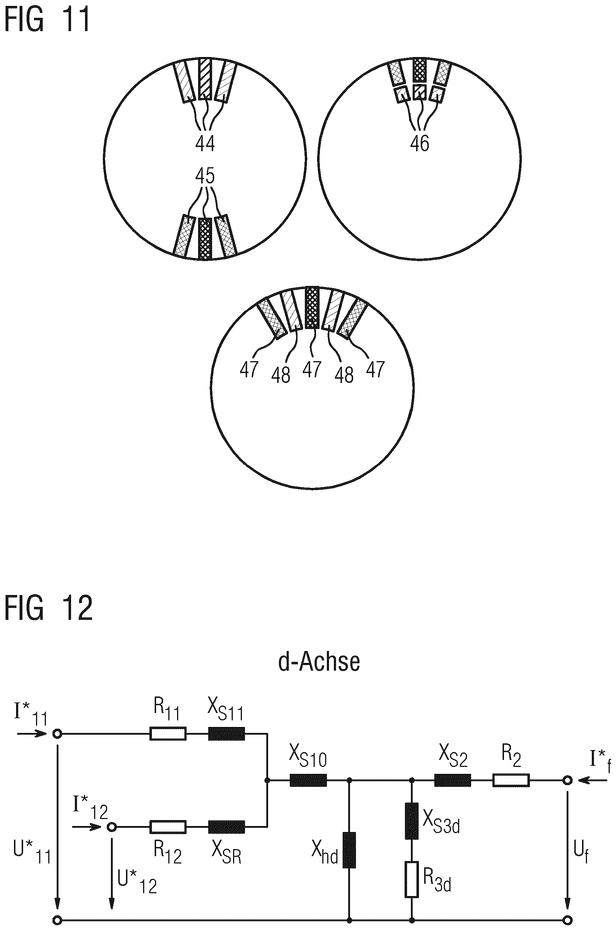

Die Darstellung nach FIG 11 zeigt schematisch die möglichen Anordnungen von Wicklungen im Stator eines Multiwicklungssystemgenerators. In einer ersten Variante können die LV-Wicklungen abschnittsweise in nebeneinander liegenden Nuten 44 sein und die MV-Wicklungen abschnittsweise in nebeneinander liegenden Nuten 45. In einer zweiten Variante können die MV-Wicklungen und die LV-Wicklungen in gemeinsamen Nuten 46 sein. In einer dritten Variante können die MV-Wicklungen und die LV-Wicklungen abwechselnd in Nuten 24 und 48 sein.

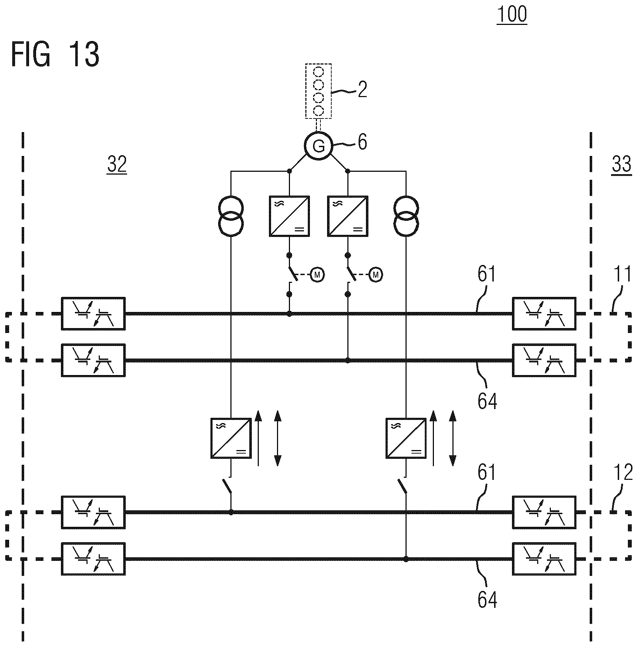

Die Darstellung nach FIG 12 zeigt ein Ersatzschaltbild für eine D-Achse eines Multiwicklungssystemgenerators. Die Darstellung nach FIG 13 zeigt einen achten Schaltplan für ein Energieversorgungssystem 100, wobei gezeigt ist wie von dem Generator 6 der erste Gleichspannungsbus 11 über zwei unterschiedliche Abschnitte 61 und 64 gespeist werden kann und wie von diesem Generator 6 auch der zweite Gleichspannungsbus 12 über auch dort zwei unterschiedliche Abschnitte gespeist werden kann.

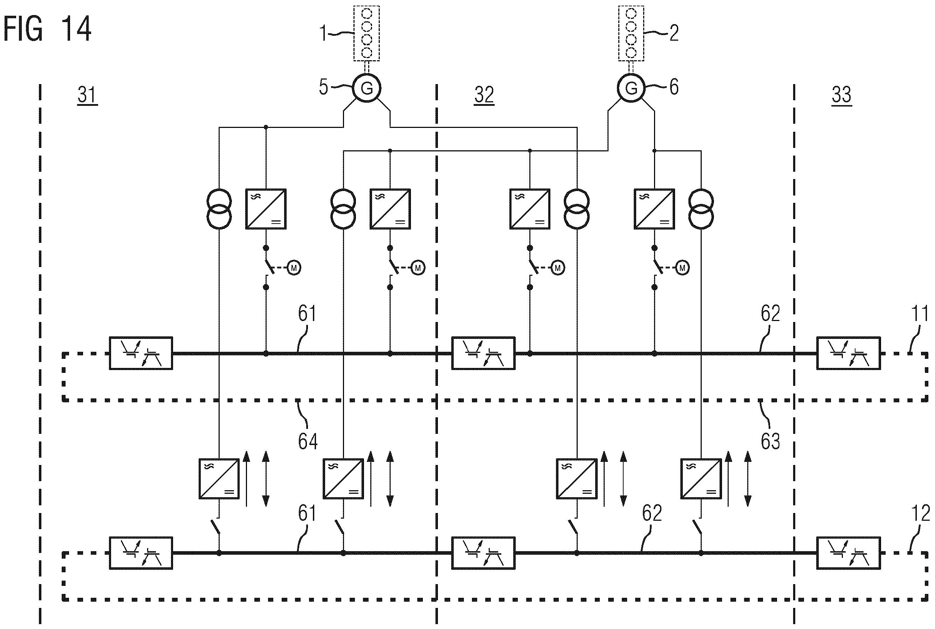

Die Darstellung nach FIG 14 zeigt, wie durch einen Generator in einer Zone (Generator 5 in Zone 31 und Generator 6 in Zone 32) jeweils zwei Abschnitte 61 und 62 des ersten Gleichspannungsbusses 11 in unterschiedlichen Zonen 31 und 32 speisbar sind und wie dies auch für den zweiten Gleichspannungsbus 12 zutrifft.

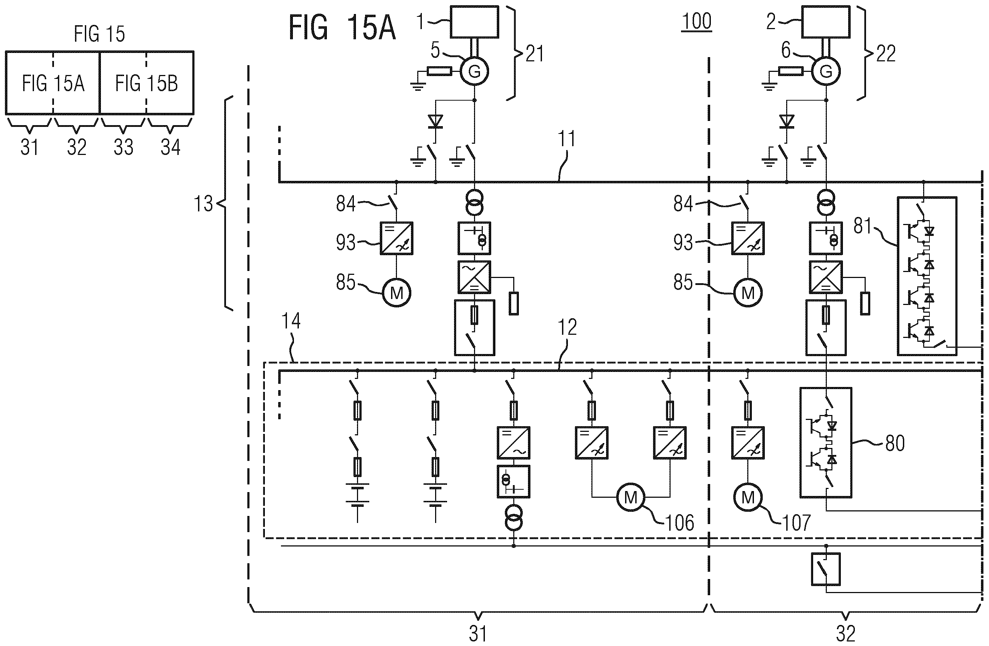

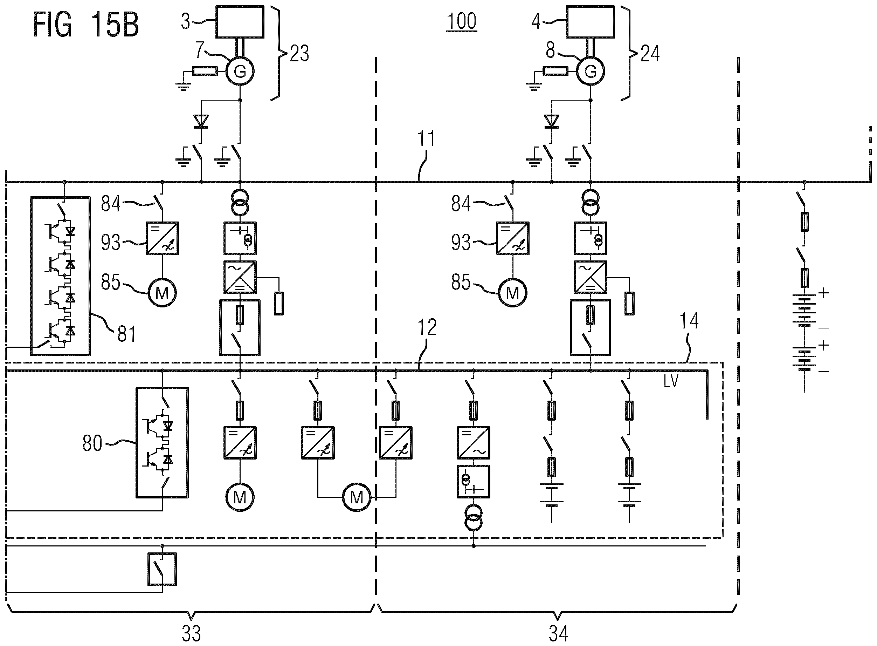

Die Darstellung nach FIG 15 ist in zwei Teilfiguren 15A und 15B aufgeteilt. Beide vereinen ein Energieversorgungssystem 100, welches vier Diesel 1, 2, 3 und 4 als Teil der Energiequellen 21, 22, 23 und 24 aufweist und zum Ausdruck bringt, dass das Energieversorgungssystem beinahe beliebig entsprechend der Anforderungen an die wassergebundene Einrichtung erweiterbar bzw. änderbar ist. Dadurch, dass sich die wassergebundene Einrichtung beispielsweise auf einem Schiff oder eine Bohrinsel befindet ist diese ganz oder überwiegend als ein Inselnetz betrieben.

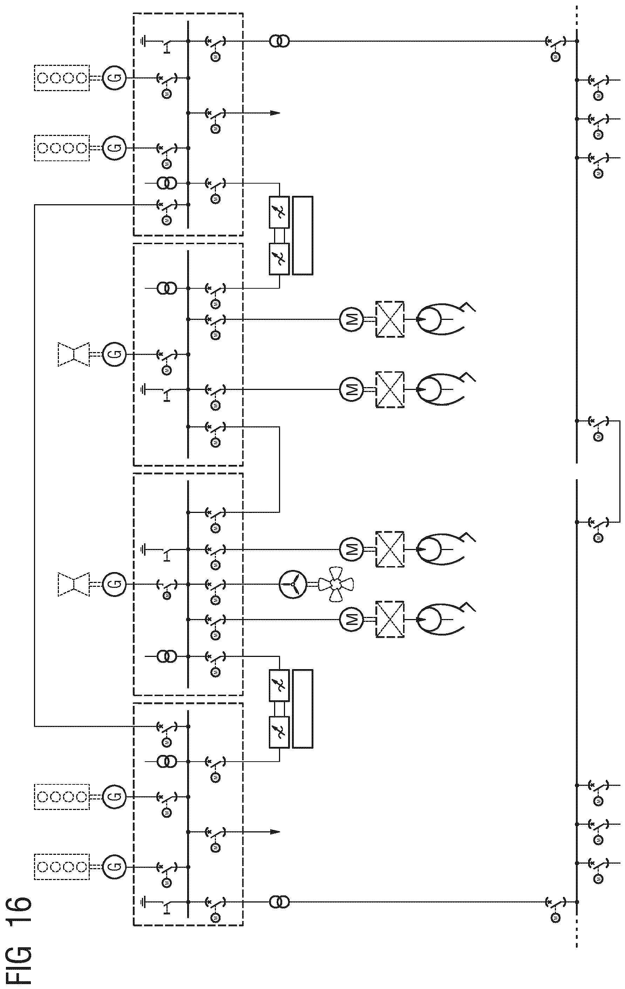

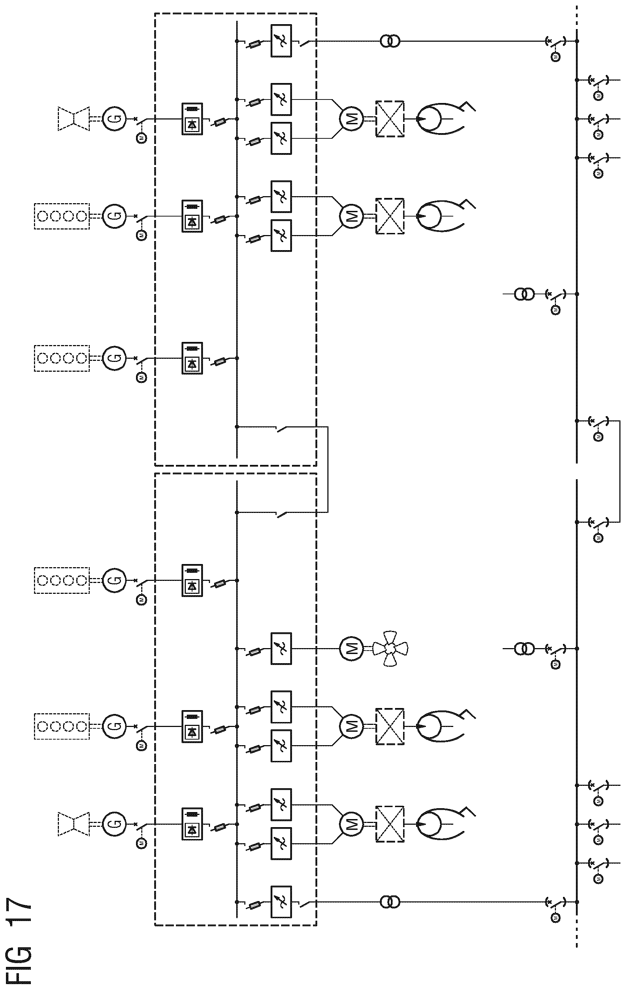

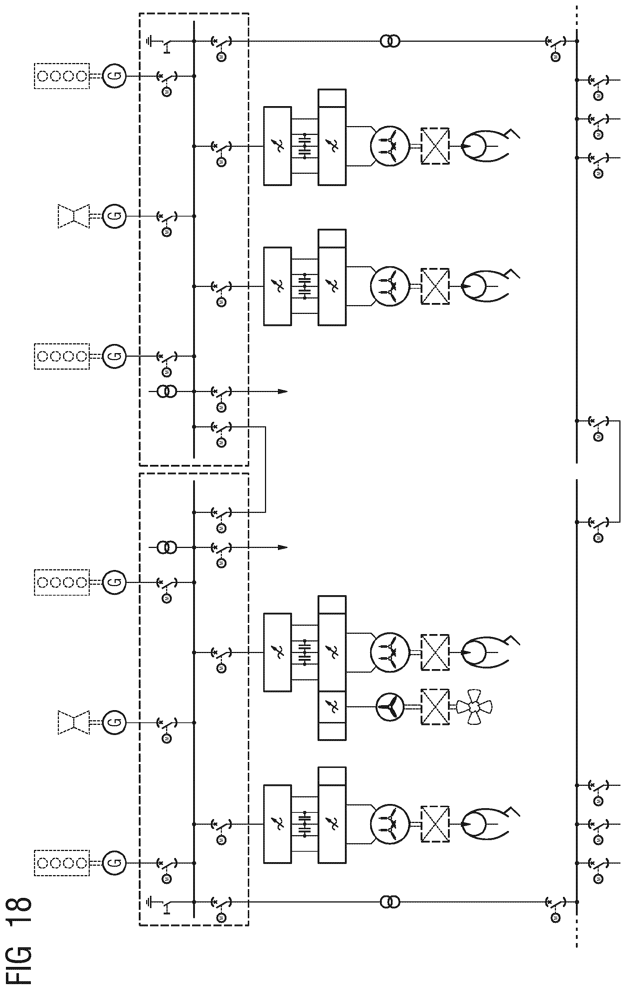

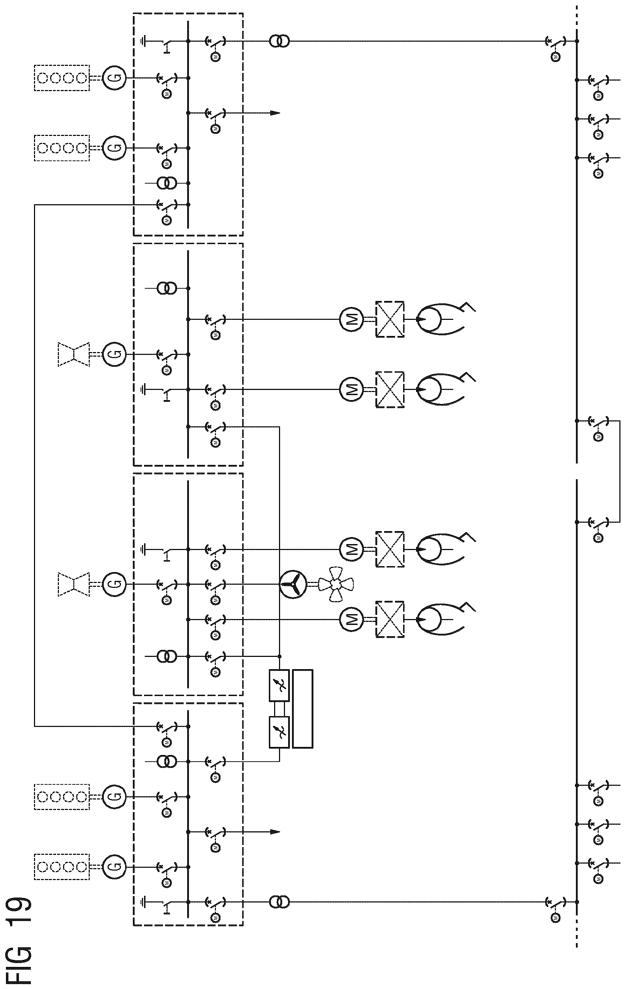

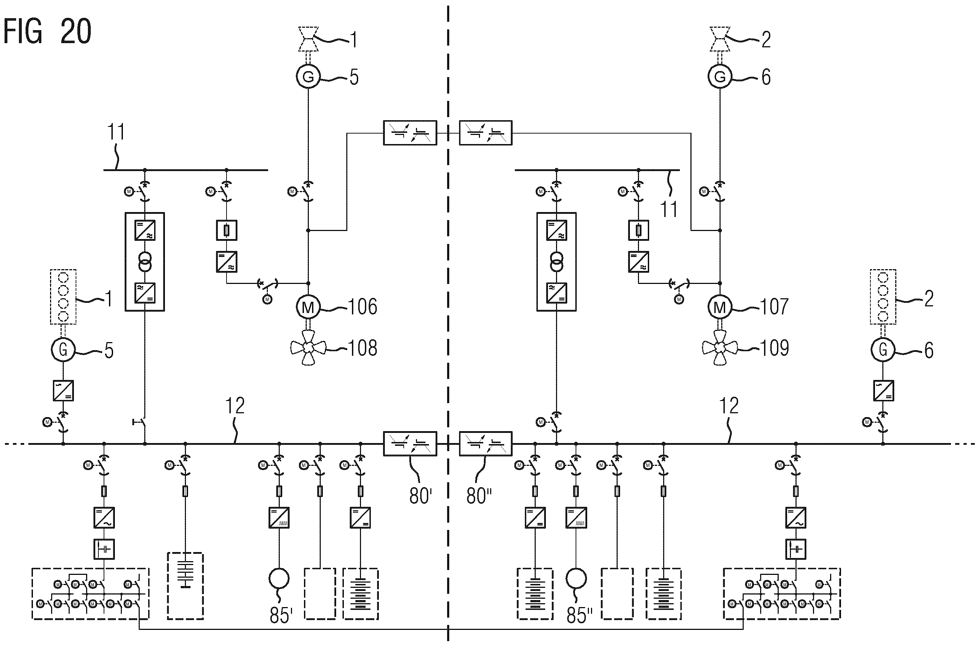

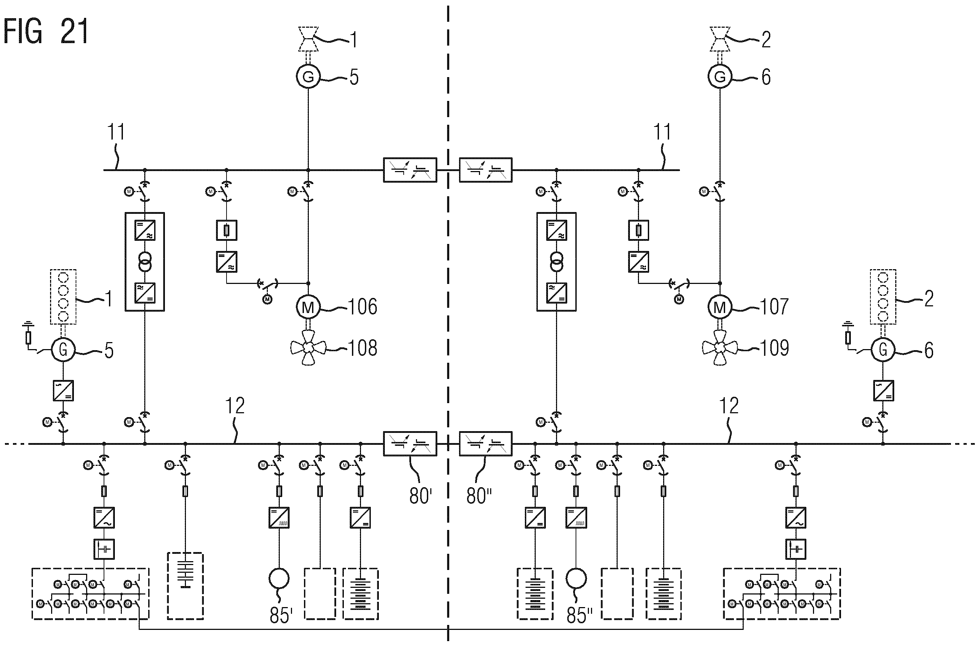

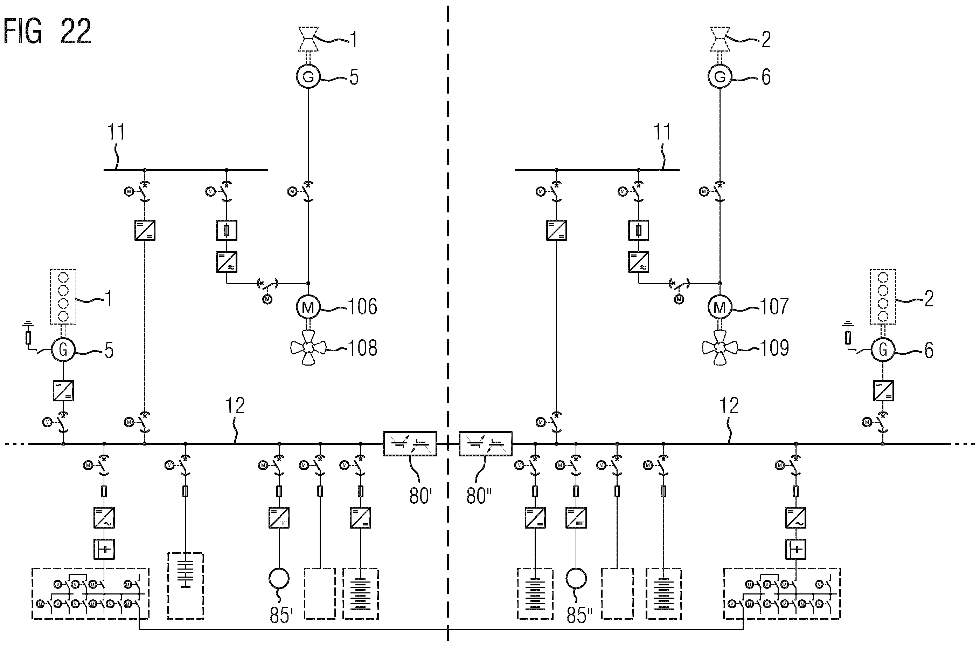

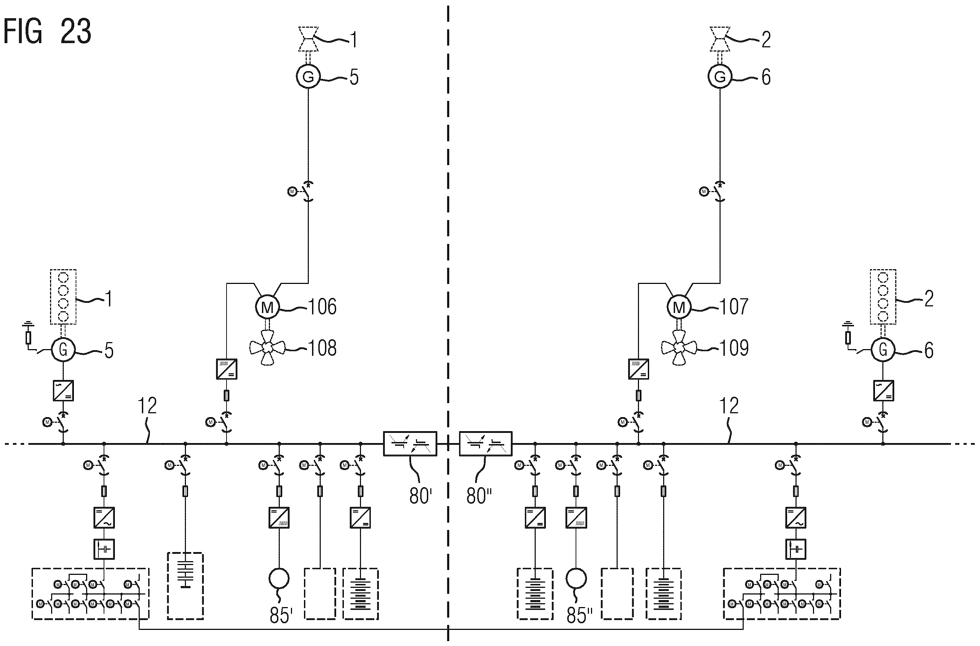

Die Darstellungen nach den Figuren 16 bis 23 zeigen weitere Beispiele und Varianten für Energieversorgungssysteme insbesondere auf Schiffen.

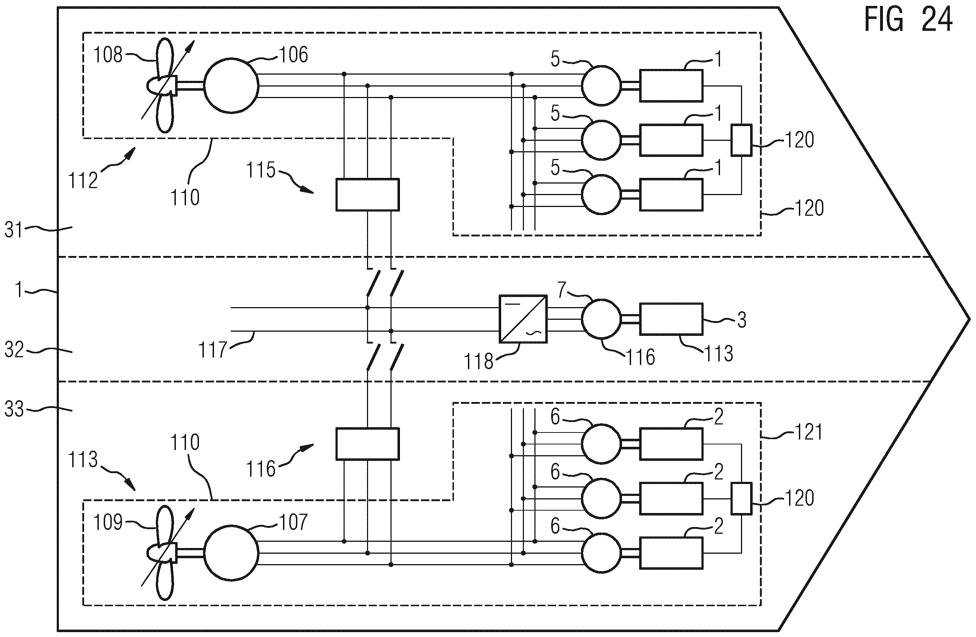

Die Darstellung nach Figur 24 zeigt ein Schiff mit drei Zonen 31, 32 und 33. In der ersten Zone 31 wird jeder der Generatoren 5 von jeweils einer Verbrennungskraftmaschine 1, z.B. einem Dieselmotor, angetrieben. Mit dem Fahrmotor 106 ist eine Vortriebseinheit in Form eines Verstellpropellers 108 mechanisch gekoppelt. Zwischen einem Generator 5 und der ihn antreibenden Verbrennungskraftmaschine 1 sowie zwischen dem Verstellpropeller 108 und dem ihn antreibenden Fahrmotor 106 kann zusätzlich noch ein mechanisches Getriebe geschaltet sein, was jedoch nicht dargestellt ist. Alternativ zum Verstellpropeller kann auch ein nicht verstellbarer Propeller eingesetzt werden.

In der dritten Zone 33 wird jeder der Generatoren 6 von jeweils einer Verbrennungskraftmaschine 2, z.B. einem Dieselmotor, angetrieben. Mit dem Fahrmotor 107 ist eine Vortriebseinheit in Form eines Verstellpropellers 109 mechanisch gekoppelt. Zwischen einem Generator 6 und der ihn antreibenden Verbrennungskraftmaschine 2 sowie zwischen dem Verstellpropeller 109 und dem ihn antreibenden Fahrmotor 107 kann zusätzlich noch ein mechanisches Getriebe geschaltet sein, was jedoch nicht dargestellt ist. Alternativ zum Verstellpropeller kann auch ein nicht verstellbarer Propeller eingesetzt werden.

Die Fahrmotoren 106 und 107 sind Schiffsantriebsmotoren, welche insbesondere als Mittelspannungsmotor ausgeführt sind.

Der Fahrmotor 106 wird ohne einen zwischengeschalteten Umrichter mit der von den Generatoren 5 erzeugten Spannung mit variabler Amplitude und variabler Frequenz betrieben, was die elektrische Welle ausmacht. Die Drehfrequenz des Fahrmotors 106 hängt von dessen Polpaarzahl ab. Die Steuerung und/oder Regelung der Drehzahl des Fahrmotors 106 und somit des Verstellpropellers 108 erfolgt somit indirekt durch die Steuerung und/oder Regelung der Verbrennungskraftmaschinen 1 zum Antrieb der Generatoren 5. Eine Drehbewegung der Verbrennungskraftmaschine 1 bzw. der Generatoren 5 bewirkt somit eine entsprechend proportionale Drehbewegung des Fahrmotors 106. Es wird somit die Funktion einer mechanischen Welle mit Hilfe von elektrischen Maschinen nachgebildet.

Der Fahrmotor 107 wird ohne einen zwischengeschalteten Umrichter mit der von den Generatoren 6 erzeugten Spannung mit variabler Amplitude und variabler Frequenz betrieben, was die elektrische Welle ausmacht. Die Drehfrequenz des Fahrmotors 106 hängt von dessen Polpaarzahl ab. Die Steuerung und/oder Regelung der Drehzahl des Fahrmotors 107 und somit des Verstellpropellers 109 erfolgt somit indirekt durch die Steuerung und/oder Regelung der Verbrennungskraftmaschinen 2 zum Antrieb der Generatoren 6. Eine Drehbewegung der Verbrennungskraftmaschine 2 bzw. der Generatoren 6 bewirkt somit eine entsprechend proportionale Drehbewegung des Fahrmotors 107. Es wird somit die Funktion einer mechanischen Welle mit Hilfe von elektrischen Maschinen nachgebildet.

Mit der von den Generatoren einer elektrischen Antriebswelle erzeugten Spannung variabler Amplitude und variabler Frequenz wird zusätzlich jeweils ein Bordnetz-Umrichter 115, 116 betrieben, der diese variable Spannung in eine DC-Spannung für einen LV DC-Bus 117 für das Bordnetz. Für das Bordnetz gibt es eine weitere Verbrennungskraftmaschine 3 und einen dieser zugeordneten Generator 7, dessen Ausgangswechselspannung über einen Gleichrichter 118 in die LV-Gleichspannung umgewandelt werden kann.

## Patentansprüche

1. Energieversorgungssystem (100) für eine wassergebundene Einrichtung (101), mit einer elektrischen Welle (120, 121), wobei die elektrische Welle (120, 121) mit einem ersten Gleichspannungsbus (11) für eine erste Gleichspannung und mit einem zweiten Gleichspannungsbus (12) für eine zweite Gleichspannung verbindbar ist, wobei die elektrische Welle (120, 121) zumindest einen von einer Verbrennungskraftmaschine angetriebenen drehzahlveränderbaren Generator zur Erzeugung einer Motorspannung mit variabler Amplitude und variabler Frequenz und zumindest einen mit dieser Motorspannung versorgten und mit einer Vortriebseinheit gekoppelten drehzahlveränderbaren Antriebsmotor aufweist, wobei der erste Gleichspannungsbus (11) für eine erste Gleichspannung vorgesehen ist und der zweite Gleichspannungsbus (12) für eine zweite Gleichspannung vorgesehen ist, wobei die erste Gleichspannung größer ist als die zweite Gleichspannung, **gekennzeichnet durch** eine Kopplung zwischen dem ersten Gleichspannungsbus (11) und dem zweiten Gleichspannungsbus (12) zum Transport elektrischer Energie vom zweiten Gleichspannungsbus niederer Spannung zum ersten Gleichspannungsbus höherer Spannung, um die elektrische Welle (120,121) mit elektrischer Energie zu versorgen.

2. Energieversorgungssystem (100) für eine wassergebundene Einrichtung (101) nach Anspruch 1, wobei als Kopplung ein DC/DC-Steller vorgesehen ist.

3. Energieversorgungssystem (100) für eine wassergebundene Einrichtung (101) nach Anspruch 1, wobei der DC/DC-Steller ein bidirektionaler DC/DC-Steller ist.

4. Energieversorgungssystem (100) für eine wassergebundene Einrichtung (101) nach einem der vorhergehenden Ansprüche, wobei die wassergebundene Einrichtung (101) eine erste Zone (31) und eine zweite Zone (32) aufweist,
mit einer ersten Energiequelle (21) und
mit einer zweiten Energiequelle (22),
wobei die erste Energiequelle (21) in der ersten Zone (31) zur Speisung zumindest eines Gleichspannungsbusses (11,12) der zumindest zwei Gleichspannungsbusse (11,12) vorgesehen ist und
wobei die zweite Energiequelle (22) in der zweiten Zone (32) zur Speisung zumindest eines Gleichspannungsbusses (11,12) der zumindest zwei Gleichspannungsbusse (11,12) vorgesehen ist, wobei das Energieversorgungssystem (100) zumindest teilweise zonenabhängig gegliedert ist.

5. Energieversorgungssystem (100) nach einem der vorhergehenden Ansprüche, wobei zumindest einer der Gleichspannungsbusse (11,12) als ein Ringbus ausbildbar ist.

6. Energieversorgungssystem (100) nach einem der vorhergehenden Ansprüche, wobei zumindest einer der Gleichspannungsbusse (11,12) für eine Erstreckung über zumindest zwei Zonen (31,32) vorgesehen ist.

7. Energieversorgungssystem (100) nach einem der vorhergehenden Ansprüche, wobei zumindest einer der Gleichspannungsbusse (11,12) Abschnitte (61,62,63,64,65,66,67) aufweist, wobei die Abschnitte zonenbezogen sind wobei insbesondere das Energieversorgungssystem durch die Abschnitte (61,62,63,64,65,66,67) gegliedert ist.

8. Energieversorgungssystem (100) nach einem der vorhergehenden Ansprüche,
wobei die erste Energiequelle (21) in der ersten Zone (31) zur Speisung des ersten Gleichspannungsbusses (11,12) und des zweiten Gleichspannungsbusses (12) vorgesehen ist.

9. Energieversorgungssystem (100) nach einem der Ansprüche 1 bis 8,
wobei unterschiedliche elektrische Wellen in unterschiedlichen Zonen (31, 32, 33, 34) sind.

10. Energieversorgungssystem (100) nach einem der Ansprüche 1 bis 9, wobei die Verbrennungskraftmaschine eine Gasturbine ist.

11. Verfahren zum Betrieb eines Energieversorgungssystems einer wassergebundenen Einrichtung (101) nach einem der Ansprüche 1-10,
wobei elektrische Energie von einem Gleichspannungsbus niederer Spannung zu einem Gleichspannungsbus höherer Spannung transportiert wird, um zumindest eine elektrische Welle (120,121) mit elektrischer Energie zu versorgen.

12. Verfahren nach Anspruch 11,
wobei die wassergebundene Einrichtung (101) eine erste Zone (31) und eine zweite Zone (32) aufweist,
wobei die wassergebundene Einrichtung (101) einen ersten Gleichspannungsbus (11) für eine erste Gleichspannung und einen zweiten Gleichspannungsbus (12) für eine zweite Gleichspannung aufweist,
wobei die wassergebundene Einrichtung (101) eine erste Energiequelle (21) und eine zweite Energiequelle (22) aufweist, wobei elektrische Energie von der ersten Zone (31) in die zweite Zone (32) oder von der zweiten Zone (32) in die erste Zone (31) übertragen wird.

13. Verfahren nach einem der Ansprüche 11 oder 12, wobei ein Energieversorgungssystem (100) nach einem der Ansprüche 1 bis 10 verwendet wird.

## Claims

1. Power supply system (100) for a water-bound facility (101), having an electrical shaft (120, 121), wherein the electrical shaft (120, 121) is connectable to a first DC voltage bus (11) for a first DC voltage and to a second DC voltage bus (12) for a second DC voltage, wherein the electrical shaft (120, 121) comprises at least one variable-speed generator, driven by an internal combustion engine, for producing a motor voltage having variable amplitude and variable frequency and at least one variable-speed drive motor that is supplied with this motor voltage and coupled to a propulsion unit, wherein the first DC voltage bus (11) is intended for a first DC voltage and the second DC voltage bus (12) is intended for a second DC voltage, the first DC voltage being higher than the second DC voltage, **characterized by** a coupling between the first DC voltage bus (11) and the second DC voltage bus (12) for transporting electrical power from the second low-voltage DC voltage bus to the first higher-voltage DC voltage bus in order to supply the electrical shaft (120, 121) with electrical power.

2. Power supply system (100) for a water-bound facility (101) according to Claim 1, wherein the coupling provided is a DC/DC chopper.

3. Power supply system (100) for a water-bound facility (101) according to Claim 1, wherein the DC/DC chopper is a bidirectional DC/DC chopper.

4. Power supply system (100) for a water-bound facility (101) according to one of the preceding claims,
wherein the water-bound facility (101) has a first zone (31) and a second zone (32),
having a first power source (21) and
having a second power source (22),
wherein the first power source (21) in the first zone (31) is intended to feed at least one DC voltage bus (11, 12) of the at least two DC voltage buses (11, 12) and
wherein the second power source (22) in the second zone (32) is intended to feed at least one DC voltage bus (11, 12) of the at least two DC voltage buses (11, 12), wherein at least part of the power supply system (100) is subdivided in zone-dependent fashion.

5. Power supply system (100) according to one of the preceding claims, wherein at least one of the DC voltage buses (11, 12) is able to be in the form of a ring bus.

6. Power supply system (100) according to one of the preceding claims, wherein at least one of the DC voltage buses (11, 12) is intended to extend via at least two zones (31, 32).

7. Power supply system (100) according to one of the preceding claims, wherein at least one of the DC voltage buses (11, 12) has sections (61, 62, 63, 64, 65, 66, 67), the sections being zone-related, wherein in particular the power supply system is subdivided by the sections (61, 62, 63, 64, 65, 66, 67).

8. Power supply system (100) according to one of the preceding claims,
wherein the first power source (21) in the first zone (31) is intended to feed the first DC voltage bus (11, 12) and the second DC voltage bus (12).

9. Power supply system (100) according to one of Claims 1 to 8,
wherein different electrical shafts are in different zones (31, 32, 33, 34).

10. Power supply system (100) according to one of Claims 1 to 9, wherein the internal combustion engine is a gas turbine.

11. Method for operating a power supply system of a water-bound facility (101) according to one of Claims 1-10,
wherein electrical power is transported from a low-voltage DC voltage bus to a higher-voltage DC voltage bus in order to supply at least one electrical shaft (120, 121) with electrical power.

12. Method according to Claim 11,
wherein the water-bound facility (101) has a first zone (31) and a second zone (32),
wherein the water-bound facility (101) has a first DC voltage bus (11) for a first DC voltage and a second DC voltage bus (12) for a second DC voltage,
wherein the water-bound facility (101) has a first power source (21) and a second power source (22),
electrical power being transferred from the first zone (31) to the second zone (32) or from the second zone (32) to the first zone (31).

13. Method according to either of Claims 11 and 12, wherein a power supply system (100) according to one of Claims 1 to 10 is used.

## Revendications

1. Système (100) d'alimentation en énergie électrique pour une installation (101) hydraulique, comprenant un arbre (120, 121) électrique, dans lequel l'arbre (120, 121) électrique peut être connecté à un premier bus (11) à tension continue pour une première tension continue et à un deuxième bus (12) à tension continue pour une deuxième tension continue, dans lequel l'arbre (120, 121) électrique a au moins un générateur à vitesse de rotation variable entraîné par une machine à combustion interne pour la production d'une tension de moteur d'amplitude variable et de fréquence variable et au moins un moteur d'entraînement à vitesse de rotation variable alimenté par cette tension de moteur et accouplé à une unité de propulsion, dans lequel le premier bus (11) à tension continue est prévu pour une première tension continue et le deuxième bus (12) à tension continue est prévu pour une deuxième tension continue, dans lequel la première tension continue est plus haute que la deuxième tension continue, **caractérisé par** un couplage entre le premier bus (11) à tension continue et le deuxième bus (12) à tension continue pour le transport d'énergie électrique du deuxième bus à tension continue à la tension plus basse au premier bus à tension continue à la tension plus haute, afin d'alimenter l'arbre (120, 121) électrique en énergie électrique.

2. Système (100) d'alimentation en énergie électrique pour une installation (101) hydraulique suivant la revendication 1, dans lequel il est prévu un régulateur tension continue/tension continue comme couplage.

3. Système (100) d'alimentation en énergie électrique pour une installation (101) hydraulique suivant la revendication 1, dans lequel le régulateur tension continue/tension continue est un régulateur tension continue/tension continue bidirectionnel.

4. Système (100) d'alimentation en énergie électrique pour une installation (101) hydraulique suivant l'une des revendications précédentes, dans lequel l'installation (101) hydraulique a une première zone (31) et une deuxième zone (32),
comprenant une première source (21) d'énergie et
une deuxième source (22) d'énergie,
dans lequel la première source (21) d'énergie est prévue dans la première zone (31) pour l'alimentation d'au moins un bus (11, 12) à tension continue parmi les au moins deux bus (11, 12) à tension continue, et
dans lequel la deuxième source (22) d'énergie est prévue dans la deuxième zone (32) pour l'alimentation d'au moins un bus (11, 12) à tension continue parmi les au moins deux bus (11, 12) à tension continue, dans lequel le système (100) d'alimentation en énergie électrique est subdivisé au moins en partie en fonction des zones.

5. Système (100) d'alimentation en énergie électrique suivant l'une des revendications précédentes, dans lequel l'un des bus (11, 12) à tension continue peut être constitué en bus annulaire.

6. Système (100) d'alimentation en énergie électrique suivant l'une des revendications précédentes, dans lequel au moins l'un des bus (11, 12) à tension continue est prévu pour s'étendre sur au moins deux zones (31, 32).

7. Système (100) d'alimentation en énergie électrique suivant l'une des revendications précédentes, dans lequel au moins l'un des bus (11, 12) à tension continue a des tronçons (61, 62, 63, 64, 65, 66, 67), dans lequel les tronçons sont rapportés aux zones, dans lequel, en particulier le système d'alimentation en énergie électrique est subdivisé par les tronçons (61, 62, 63, 64, 65, 66, 67).

8. Système (100) d'alimentation en énergie électrique suivant l'une des revendications précédentes,
dans lequel la première source (21) d'énergie est prévue dans la première zone (31) pour l'alimentation du premier bus (11, 12) à tension continue et du deuxième bus (12) à tension continue.

9. Système (100) d'alimentation en énergie électrique suivant l'une des revendications 1 à 8,
dans lequel des arbres électriques différents se trouvent dans des zones (31, 32, 33, 34) différentes.

10. Système (100) d'alimentation en énergie électrique suivant l'une des revendications 1 à 9, dans lequel la machine à combustion interne est une turbine à gaz.

11. Procédé pour faire fonctionner un système d'alimentation en énergie électrique d'une installation (101) hydraulique suivant l'une des revendications 1 à 10,
dans lequel on transporte de l'énergie électrique d'un bus à tension continue de tension plus basse à un bus à tension continue de tension plus haute pour alimenter au moins un arbre (120, 121) en énergie électrique.

12. Procédé suivant la revendication 11,
dans lequel l'installation (101) hydraulique a une première zone (31) et une deuxième zone (32),
dans lequel l'installation (101) hydraulique a un premier bus (11) à tension continue pour une première tension continue et un deuxième bus (12) à tension continue pour une deuxième tension continue,
dans lequel l'installation (101) hydraulique a une première source (21) d'énergie et une deuxième source (22),
dans lequel on transfère de l'énergie électrique de la première zone (31) à la deuxième zone (32) ou de la deuxième zone (32) à la première zone (31).

13. Procédé suivant la revendication 11 ou 12, dans lequel on utilise un système (100) d'alimentation en énergie suivant l'une des revendications 1 à 10.
